# EUROPÄISCHE PATENTSCHRIFT

(11) **EP 3 090 973 B1**
(45) Veröffentlichungstag und Bekanntmachung des Hinweises auf die Patenterteilung: **02.05.2018**
(21) Anmeldenummer: 16168033.5
(22) Anmeldetag: 03.05.2016
(51) Int. Cl.: B65H 1/06, B65H 3/06, B65H 3/52, B65H 3/56, B65H 9/16, B65G 39/02, B65H 5/06

(54) **GUTVERARBEITUNGSGERÄT ZUM ANLEGEN UND VEREINZELN VON FLACHEM GUT**
PRODUCT PROCESSING APPARATUS FOR APPLYING AND SEPARATING A FLAT PRODUCT
APPAREIL DE TRAITEMENT DE PRODUIT DESTINE A PLACE ET SEPARER DES PRODUITS PLATS

(30) Priorität: 07.05.2015 DE 202015102333 U
(43) Veröffentlichungstag der Anmeldung: 09.11.2016
(73) Patentinhaber: Francotyp-Postalia GmbH, 13089 Berlin (DE)
(72) Erfinder: Muhl, Wolfgang, 16540 Hohen Neuendorf (DE)

(56) Entgegenhaltungen:
- WO-A1-98/28212
- DE-U1-202012 011 877

## Beschreibung

Die Erfindung betrifft ein Gutverarbeitungsgerät zum Anlegen und Vereinzeln von flachem Gut gemäß dem Oberbegriff des Patentanspruchs 1. Solche Geräte werden zum Beispiel als Module von Gutverarbeitungssystemen bzw. als Stationen einer Poststraße eingesetzt. Eine Poststraße eines Frankiersystems besteht aus einzelnen aneinandergereihten Poststückverarbeitungsstationen. Eine Anlegestation dient zum Anlegen von einzelnen oder gestapelten Poststücken und ist poststromaufwärts, d.h. am Anfang der Poststraße aufgestellt. Ein Stapel an Poststücken unterschiedlichen Formats (Mischpost), der an die Anlegestation angelegt wurde, wird in der Poststraße mittels einer in Transportrichtung unmittelbar nachfolgenden Vereinzelungsvorrichtung einer Zuführstation vereinzelt, da weitere nachfolgende Poststückverarbeitungsstationen einzeln zugeführten Poststücke benötigen. Die Anlege- und Vereinzelungsstationen des Gutverarbeitungsgeräts bzw. das Gutverarbeitungsgerät zum Anlegen und Vereinzeln von flachen Gut sind für einen Einsatz in Verbindung mit nachfolgenden Gutverarbeitungsvorrichtungen vorgesehen zum Beispiel in Verbindung mit Frankier-, Adressiermaschinen und anderen druckenden Postverarbeitungsgeräten.

Unter Mischpost sollen hier formatähnliche Poststücke verstanden werden, die in der Höhe und Breite in Grenzen um bis zu 10% differieren, beispielsweise Briefe der Formate B6 (12.5 x 17.6 cm) und C6 (11.4 x 16.2 cm).

Wenn nachfolgend von einem Stapel gesprochen wird, sind Briefstapel, Postkartenstapel und andere Poststückstapel oder ein anderes gestapeltes Gut gemeint, welches sich vereinzeln lässt.

Im Bereich von Frankiermaschinen sind Lösungen bekannt, die ein Poststück in Transportrichtung poststromabwärts transportieren und während des Transportes mit einem Frankierabdruck bedrucken.

In der Frankiermaschine Centormail® der Anmelderin wird derartige Mischpost auf der Kante stehend mittels eines Transportbands transportiert, wobei an der Kante automatisch eine Ausrichtung der Poststücke durch die Schwerkraft erfolgt.

Im Bereich von Frankiermaschinen sind auch Lösungen bekannt, die ein auf einer Seite liegendes Poststück in Transportrichtung poststromabwärts transportieren, wie beispielsweise die Frankiermaschine PostBase® der Anmelderin. Der Frankiermaschine kann eine automatische Zuführstation posteingangsseitig vorangestellt werden. In dem deutschen Gebrauchsmuster DE 20 2011 107 379 U1, welches äquivalent zu dem US 8 702 090 B2 ist, wurde bereits eine modulare Anlegevorrichtung einer Zuführstation vorgeschlagen. Die Zuführstation folgt poststromabwärts einer Anlegestation. Letztere ist als rein manuell bedienbares Modul ohne eigene Antriebstechnik ausgebildet, dessen Auflegedeck bei Bedarf rampenartig aufgestellt werden kann. Durch die so geschaffene Rampe wird die Schwerkraft zur Unterstützung der Zuführung von Poststücken benutzt. Jedoch erfolgt keine Ausrichtung der Poststücke durch die Schwerkraft. Vielmehr ist ein Schieber vorgesehen, mit welchen ein Stapel manuell an eine Führungsplatte der Anlegestation gedrückt wird, welche als Ausrichtwand dient. Es kann damit aber nicht sichergestellt werden, dass alle Poststücke eines Mischpoststapels mit ihrer Seitenkante an der Ausrichtwand anliegen. Problematisch wird eine solche Kantenausrichtung dann, wenn die auf ihrer Seite liegend transportierten Poststücke ohne Mitwirkung der Schwerkraft an einer Ausricht-, Anlage- bzw. Führungswand ausgerichtet werden sollen.

Bekannte Postverarbeitungsgeräte führen das unterste Poststück eines Poststückstapels der Ausrichtwand mittels angetriebener Rollen zu. Aus dem US 4,973,037 ist bereits eine Zuführstation für eine Postbehandlungsmaschine bekannt, die zur Behandlung gemischter Post (gefüllte Umschläge mit offener oder geschlossener Umschlagsklappe) mit hoher Geschwindigkeit vorgesehen ist. Diese ist mit einer Stapelplatte, mit einer Einrichtung zum Querbewegen einer Seitenwand relativ zur Stapelplatte und mit Transporteinrichtungen in einem Stapelmagazinbereich ausgestattet. Ein Teil der Transporteinrichtungen liegt unterhalb der Stapelplatte. Die Seitenwand dient als Ausrichtungsoberfläche, gegen die die Klappenkanten von Umschlägen zum Anschlag gebracht werden können.

Es sind bereits Mittel zum Transportieren der Poststücke sowohl stromabwärts, als auch in Richtung auf die Ausrichtungswand sowie zum Auflockern der Poststücke (offene oder verschlossene gefüllte Briefumschläge) eines Stapels vorgesehen, damit sie leichter übereinandergleiten können. Diese Transportmittel sind exzentrisch gestaltete Auflockerungsrollen mit unterschiedlichen Reibungskoeffizienten. Dabei werden Rollengruppen durch einen Motor angetrieben und mittels einer Steuerscheibe periodisch in einem kleinen Winkelbereich hin- und herbewegt. Außerdem wurde ein Mehrfachschrägstellen der Poststapelplatte im Stapelmagazinbereich vorgeschlagen, um die Schwerkraft für die Ausrichtung der Poststücke zu nutzen. Durch das Mehrfachschrägstellen der Poststapelplatte im Stapelmagazinbereich kann der Briefumschlag beim Übergang in den Zuführbereich mit horizontalen gegebenenfalls einklemmen, insbesondere bei geöffneter Umschlagsklappe. Durch den kleinen Winkelbereich ist eine Ausrichtung der Poststücke nur in einem beschränkten Maße möglich. Außerdem ist das Auflagedeck groß gegenüber dem größten Format eines Poststücks, damit sind keine kleinen Abmaße der Grundfläche des Postverarbeitungsgeräts erreichbar.

Eine Ausrichtung kann aber nur solange erfolgen, wie der Briefumschlag nicht die Vereinzelungsschleuse erreicht hat. Sobald der Briefumschlag dort anliegt, wird er in die Vereinzelungsschleuse eingezogen. Dann ist ein Verschieben des Stapels und dessen Ausrichtung an der Ausricht- bzw. Anlagewand nicht mehr möglich. Zwar werden Mittel zur Auflockerung eines Stapels von Poststücken bereits eingesetzt, um die Haftreibung zwischen den Poststücken zu verringern, was ein Ausrichten des Stapels an der Ausrichtwand vor der Vereinzelung der Poststücke ermöglicht. Die Mittel zur Auflockerung eines Stapels von Poststücken (Briefe) sind aber dann wirkungslos, wenn mehrere Poststücke (Briefe) bereits in die Vereinzelungsschleuse eingefahren worden sind. Folglich ist entweder zu verhindern, dass mehrere Poststücke (Briefe) in die Vereinzelungsschleuse eingefahren werden oder der Zustand muss nachträglich korrigiert werden. Ein Vorteil der Vereinzelung des jeweils untersten Poststückes besteht in einer Möglichkeit des Nachfüllens von weiteren Poststücken von oben auf den Stapel, was ohne Unterbrechung des Betriebs der Vereinzelungsvorrichtung möglich ist. Dabei erhöht sich jedoch das Gewicht des Stapels und somit die Haftreibung zwischen dem untersten Poststück und dem jeweils nachfolgenden zu vereinzelnden Poststück. Das wiederum führt dazu, dass vermehrt eine Anzahl an dünnen Poststücken (Briefen) in die Vereinzelungsschleuse eingezogen wird.

Bei einem Mischpoststapel mit einigen dicken Poststücken (Briefen) kann nicht mit einem fest eingestellten Vereinzelungsspalt gearbeitet werden, sondern die Poststücke (Briefe) drücken abhängig von ihrer Dicke die Vereinzelungsschleuse auseinander. Nicht nur durch die Haftreibung, sondern auch durch elektrostatische Aufladung können Briefe aneinander haften bleiben. Somit können dadurch mehr als nur ein Brief gleichzeitig in die Vereinzelungsschleuse eingefahren werden, was insbesondere bei dünnen Briefen des Mischpoststapels vermehrt auftritt und eine unerwünschte Fehlfunktion verursacht. Ein weiterer problematischer Zustand ergibt sich für eine Vereinzelungsvorrichtung in dem Fall, dass nach einem jeden Abziehen des jeweils untersten Briefes des Stapels die nachfolgenden Briefe immer wieter in die Schleuse eingezogen werden, als der jeweilige Brief vor dem nachfolgenden Brief. Um diese Fehlfunktionen zu minimieren, werden solche Schleusen auf einen erforderlichen Dickenbereich voreingestellt. Das begrenzt wiederum die Mischpostfähigkeit der Vereinzelungsvorrichtung.

Aus der internationalen Patentanmeldung WO 98/28212 A1 ist auch schon eine Ausrichtung zum Vereinzeln von Blattgut aus einem Stapel bekannt. Auf eine Auflageplatte einer Ausrichteinrichtung wird ein Stapel gleichdicker Blattgüter von unterschiedlicher Größe und Qualität gelegt, um diesen Stapel zu vereinzeln. Zum Transport des untersten Blatts von einem Stapel mit Blättern, ist eine fest angeordnete Vorschubeinrichtung mit mehreren elliptischen Nockenrädern und orthogonalen Transportbändern vorgesehen. Diese kann parallel oder in einen festen Winkel zur Transportrichtung angeordnet sein. Die Vorschubeinrichtung wirkt alternierend durch die Durchbrüche der Auflageplatte auf das unterste Blatt ein, um es zu transportieren und auszurichten. Zur Vorvereinzelung einer begrenzten Teilmenge von Blättern ist eine Rückhalteplatte mit einem Spalt vorgesehen. Eine Andruckvorrichtung mit einem Andruckelement ist stromabwärts nach der Rückhalteplatte angeordnet, wobei das Andruckelement mit einer definierten Kraft auf einen Teil des Stapels einwirkt. Die Abzugsvorrichtung soll dadurch optimal auf das zu vereinzelnde Blattgut angepasst werden. Ungleich dicke flache Guter können jedoch nicht vereinzelt werden, da sich für die Abzugseinrichtung dann kein definierter Zustand erreichen lässt. Die Ausrichteinrichtung und Vorschubeinrichtung sind nicht variabel verstellbar und können nicht an die unterschiedlichen Briefkuvertsorten angepasst werden. Folglich ist die Vorrichtung ungeeignet, Briefkuverte mit unterschiedlicher Dicke von 0,3mm bis 10mm, die in einem Stapel von gemischten Poststücken vorvorliegen, zu vereinzeln. Für eine sichere Ausrichtung des nächst folgenden flachen Gutes des Stapels ist es nachteilig, dass die in der Andruckvorrichtung verbleibende Teilmenge von flachen Gütern, nach Anzug des untersten flachen Gutes in der Andruckvorrichtung mit einer definierten Kraft eingeklemmt bleibt. Der in der Vorschleuse eingeklemmte Stapel ist an dieser Stelle nicht verschiebbar. Außerdem ist eine alternierende Vorschubbewegung durch Nockenrädern von Nachteil, da sie bei hohen Transportgeschwindigkeiten ungewollte Schwingungen erzeugen, was erhebliche Störungen in einer nachfolgenden dynamischen Waage des Gutverarbeitungsgerätes verursacht.

Aus dem deutschen Gebrauchsmuster DE 20 2012 011 876 U1 ist eine Zuführstation bekannt. Die Zuführstation weist einen Vorvereinzelungsbereich, einen Vereinzelungsbereich und einen Transportbereich auf. Der Transportbereich ist in Transportrichtung nach dem Vereinzelungsbereich längs eines Transportpfades angeordnet. Ein Prozessor einer Steuerungseinheit der Zuführstation ist programmiert, durch eine entsprechende Ansteuerung von Transportwalzen eine Lücke zwischen den vereinzelten flachen Gütern auf einen gewünschten Abstand zu verkleinern. Die Transportwalzen sind in dem Transportbereich angeordnet. Der Vereinzelungsbereich lässt Briefe mit einer maximalen Dicke von 10 mm durch. Der Durchsatz der vereinzelten Briefe ist auf 65 Briefe pro Minute begrenzt.

In dem deutschen Gebrauchsmuster DE 20 2012 011 877 U1, welches äquivalent zu dem US 8 965 568 B2 ist, wurden schon eine Zuführstation vorgeschlagen, zum Zuführen eines flachen Guts, das auf der Seite liegend an eine Anlegestation angelegt und mittels der Zuführstation einzeln oder aus einem Stapel vereinzelt und stromabwärts transportiert wird, um das Gut einem nachfolgenden Gutverarbeitungsgerät zuzuführen. Eine Steuereinheit weist einen Prozessor, ein Signalverarbeitungsmittel für die Signale der Sensoren und der Encoder sowie ein Ermittlungsmittel zur Ermittlung der Position des flachen Guts auf. Der Prozessor der Steuereinheit ist programmiert, eine Lücke zwischen den vereinzelten flachen Gütern auf einen gewünschten Abstand zu vergrößern. Gemäß der DE 20 2012 011 877 U1 liegt der Stapel jeweils mit den untersten flachen Gut teilweise auf einer ersten Vereinzelungswalze, welche im Vorvereinzelungsbereich der Zuführstation angeordnet ist. Im Abstand dazu ist in Transportrichtung eine zweite Vereinzelungswalze im Vereinzelungsbereich der Zuführstation angeordnet.

An einem Gestell der Zuführstation ist ein zu Wartungszwecken vertikal verschiebbarer Andruckkasten montiert. Der Andruckkasten weist zwei federkraftbeaufschlagte Andruckwalzen auf, wobei die Federkraft von Druckfedern ausgeübt wird. Die Druckfedern stützen sich im Inneren des Andruckkastens ab. Der Andruckkastens ist im Gestell verriegelbar montiert. Die beiden Andruckwalzen drücken mit einer Federkraft auf zwei Transportwalzen, deren Drehachsenwellen unter dem Deck auf dem Gestell der Zuführstation gelagert sind und die im Transportbereich jeweils durch separate Öffnungen im Deck der Zuführstation nach oben hindurchragen. Während des Transportes wird ein flaches Gut durch die beiden Paare von Andruckwalzen-Transportwalzen eingeklemmt und entlang des Transportpfades weitertransportiert. Der Andruckkasten weist eine drehbar gelagerte Schwinge auf, die durch eine Zugfeder federkraftbeaufschlagt eine Andruckkraft über mehrere Vereinzelungsfinger auf ein zu vereinzelndes flaches Gut im Vereinzelungsbereich der Zuführstation ausübt, welches im Ergebnis des Antreibens der Transportelemente der Anlegestation in einen Spalt zwischen einer zweiten Vereinzelungswalze und den Vereinzelungsfingern eintritt. Vor und oberhalb des Spalts sind Maßnahmen getroffen worden welche den Eintritt von mehreren dünnen flachen Gütern in den Spalt verhindern sollen (DE 20 2012 011 877 U). Die Vereinzelungsvorrichtung der Zuführstation weist eine Schleuse für flaches Gut auf, die im Vereinzelungsbereich mehrstufig ausgebildet ist und mindestens eine Vorschleuse und eine Hauptschleuse umfasst. Ein Stapel von flachen Gütern auf dem Zuführdeck liegt an der posteingangsseitigen Wand eines Gehäuseteils der Zuführstation an. Der untere Rand des Gehäuseteils bildet eine erste Stufe, die ca. 30 mm parallel über der Oberfläche des Zuführdecks liegt. Die erste Vereinzelungswalze ragt ca. 6,5 mm über die Oberfläche des Zuführdecks hinaus. Diese erste Stufe hält die gestapelten flachen Güter ab einer Stapelhöhe größer 23,5 mm zurück. Eine zweite Stufe zur Rückhaltung der gestapelten flachen Güter des Stapels bildet eine Stapelanschlagsfläche mit stufenförmig abgewinkeltem Blechwinkel am unteren Rand eines Vorvereinzelungsblechs. Das letztgenannte ist an der Kopfseite der Schwinge montiert. Zwischen der Kopfseite der Schwinge und dem Drehpunkt der drehbar gelagerten Schwinge liegt ein Großteil des Formkörpers der Schwinge, welcher in Transportrichtung einen langen Hebelarm bildet. Die Stufenunterseite des abgewinkelten Blechwinkels liegt beispielsweise ca. 18,5 mm über der Oberfläche des Zuführdecks. In Folge dessen kann nur ein einziges dickes flaches Gut mit einer maximalen Dicke von 12 mm diese Stufe passieren oder mehrere dünnere flache Güter. Nach der vorgenannten Stufe folgen die oben an der Kopfseite der Schwinge befestigten und schräg nach unten in Transportrichtung weisenden Vorvereinzelungsfinger und stromabwärts ein ebenfalls schräg angeordnetes Anlaufblech, an welchen die Vereinzelungsfinger befestigt sind. Das letztere bildet zusammen mit der zweiten Vereinzelungswalze die Hauptschleuse. Obwohl der Vereinzelungsbereich mehrstufig ausgebildet ist, eignet sich diese Ausbildung gemäß DE 20 2012 011 877 U1 nicht für alle flache Güter, sondern sie wurde insbesondere für Poststücke entwickelt.

Es ist Aufgabe, ein Gutverarbeitungsgerät zum Anlegen und Vereinzeln von flachen Gut zu entwickeln, umfassend eine Anlegevorrichtung bzw. eine Anlegestation, die zusammen mit einer Vereinzelungsvorrichtung bzw. einer Zuführstation einen höheren Durchsatz an flachen Gütern ermöglicht, welche auf der Seite liegend transportiert werden. Insbesondere soll die Anlegestation zusammen mit der Zuführstation einen höheren Durchsatz mindestens von 90 Poststücken des DIN-Formats C6 bzw. C6-lang pro Minute ermöglichen. Bekanntlich steigt mit einem höheren Durchsatz auch die Fehlerrate bei der Vereinzelung. Eine weitere Aufgabe besteht darin, die Fehlerrate zu verringern und die Vereinzelungssicherheit zu erhöhen. Nicht ausgerichtete flache Gütern eines Stapels sollen an der Ausrichtwand der Anlegestation automatisch ausgerichtet werden. Die Grundfläche des Postverarbeitungsgeräts soll möglichst klein sein. In der Anlegevorrichtung des Gutverarbeitungsgeräts bzw. Anlegestation soll ein Ausrichten von flachen Gütern eines Stapels an der Ausrichtwand vor bzw. nach der Vereinzelung von flachen Gütern des Stapels ermöglicht werden, wobei die flachen Güter unterschiedliche Abmessungen aufweisen können. Insbesondere sollen formatähnliche Poststücke eines Mischpoststapels vereinzelt werden. Die Anlege- und Vereinzelungsvorrichtungen bzw. -stationen sollen aber auch für ein anderes stapelbares Gut geeignet sein, welches Formatabweichungen bis zu 20% in der Höhe und Breite aufweist.

Die Aufgabe wird mit den Merkmalen des Gutverarbeitungsgeräts nach dem Patentanspruch 1 und einem Verfahren nach dem Patentanspruch 13 gelöst. Es wurde empirisch gefunden, dass mehrere gestapelte flache Güter, wie Briefe u.a. Poststücke, dann nicht mehr an eine Ausricht- bzw. Anlagewand verschoben werden können, wenn einige dieser flachen Güter des Stapels bereits in die Vereinzelungsschleuse eingefahren wurden, obwohl diese noch gar nicht vereinzelt werden sollten. Beim Auftreten einer solchen unerwünschten Fehlfunktion ist kein Ausrichten mehr möglich bzw. sinnvoll. Auch das Gewicht des Stapels ist bei der Haftreibung zwischen dem untersten flachen Gut und dem jeweils nachfolgenden zu vereinzelnden flachen Gut zu beachten, wenn das unterste flachen Gut im Stapel zuerst vereinzelt werden soll und die flachen Güter nicht auf der Kante stehend, sondern auf der Seite liegend transportiert werden. Zur Lösung des Problems, dass bei eingeklemmten flachen Gütern des Stapels, die bereits in die Vereinzelungsschleuse eingefahren wurden, ein Ausrichten des Stapels an der Ausrichtwand vor der Vereinzelung des jeweils untersten flachen Guts des Stapels unmöglich ist, wird vorgeschlagen, eine Kantenausrichtung und Vereinzelung trotz unterschiedlicher Stapelgewichte nach der Vereinzelung des jeweils untersten flachen Guts im Stapel nachträglich für die übrigen flachen Güter des Stapels zu ermöglichen.

Eine Anlegevorrichtung ist zur Kantenausrichtung eines Stapels von flachen Gütern mit unterschiedlichen Format ausgestattet und weist mindestens zwei Transportelemente aufweist, die ein automatisches Verschieben des Stapels quer zur Transportrichtung und Anlegen des Stapels an eine Ausrichtwand sowie einen Transport des Stapels in Transportrichtung zum Zuführdeck einer Vereinzelungsvorrichtung sowie ein Verschieben des Stapels entgegen der Transportrichtung ermöglichen. Die Anlegevorrichtung kommt in einem Gutverarbeitungsgerät bzw. einer Anlegestation zum Einsatz. Das Gutverarbeitungsgerät weist neben dem Auflegedeck und der Anlegevorrichtung auch ein Zuführdeck und die Vereinzelungsvorrichtung auf, wobei das Zuführdeck eine Öffnung für eine Vereinzelungswalze aufweist. Ein Teil der Vereinzelungsvorrichtung ist oberhalb des Zuführdecks angeordnet und bildet zusammen mit der Vereinzelungswalze eine Hauptschleuse der Vereinzelungsvorrichtung zur Vereinzelung eines Stapels von flachen Gütern. Die Vereinzelungsvorrichtung kommt beispielsweise in einer Zuführstation zum Einsatz. Die Vereinzelungsvorrichtung des Gutverarbeitungsgeräts bzw. der Zuführstation weist neben den an sich bekannten Mitteln zur Vereinzelung des Stapels ein erfindungsgemäßes Bewegungsmittel zur Bewegung eines Teils der Vereinzelungsvorrichtung in eine zur Transportrichtung entgegengesetzten Richtung auf.

Die Hauptschleuse der Vereinzelungsvorrichtung liegt im Eingangsbereich der Zuführstation. Das vorgenannte Teil der Vereinzelungsvorrichtung ist oberhalb des Zuführdecks des Gutverarbeitungsgeräts bzw. der Zuführstation angeordnet und schließt ein Anlaufblech ein. Das Bewegungsmittel besteht aus einem Antriebsmodul mit zugehöriger Bewegungsmechanik zur Bewegung des vorgenannten Teils der Vereinzelungsvorrichtung in Transportrichtung x und entgegengesetzt dazu.

Es ist vorgesehen, dass die Anlege- und Vereinzelungsvorrichtungen des Gutverarbeitungsgeräts in einem gemeinsamen Gehäuse untergebracht oder dass die Anlegevorrichtung in einer Anlegestation und die Vereinzelungsvorrichtung in einer Zuführstation angeordnet sind, wobei die Anlegestation und die Zuführstation jeweils in einem separaten Gehäuse untergebracht sind. Weiterhin sind Mittel zur Steuerung des Ausrichtungszustandes der Transportelemente der Anlegevorrichtung bzw. der Anlege- und Vereinzelungsvorrichtungen sowie zur Steuerung der Bewegung eines Teils der Vereinzelungsvorrichtung vorgesehen, wobei das vorgenannte Teil ein Verschieben des Stapels entgegen der Transportrichtung ermöglicht.

Gemäß einer ersten Ausführungsvariante ist eine gemeinsame Steuereinheit zur Steuerung der Anlege- und Vereinzelungsvorrichtungen des Gutverarbeitungsgeräts vorgesehen. Ein Computerprogramm ermöglicht der gemeinsamen Steuereinheit eine Datenverarbeitung, nachdem es in Speichermittel der gemeinsamen Steuereinheit geladen worden ist, um ein Verfahren zum Steuern der Transportelemente der Anlegevorrichtung und ein Verfahren zum Vereinzeln von Mischpost durch die Vereinzelungsvorrichtung in einer vorbestimmten zeitlichen Reihenfolge durchzuführen. Die Anlege- und Vereinzelungsvorrichtungen und die o.g. Steuereinheit sind in einem gemeinsamen Gehäuse des Gutverarbeitungsgeräts angeordnet.

In einer zweiten Ausführungsvariante ist jeweils eine Steuereinheit in der Anlegestation und der Anlegestation vorgesehen. Die Steuereinheit der Zuführstation ist mit der Steuereinheit der Anlegestation kommunikativ verbunden. Ein erstes Computerprogramm ermöglicht eine Datenverarbeitung durch die Steuereinheit der Anlegestation, nachdem es in Speichermittel der Steuereinheit geladen worden ist, um ein Verfahren zum Steuern der Transportelemente der Anlegestation in einer vorbestimmten zeitlichen Reihenfolge durchzuführen. Ein zweites Computerprogramm ermöglicht eine Datenverarbeitung durch die Steuereinheit der Zuführstation, nachdem es in Speichermittel von deren Steuereinheit geladen worden ist, um ein Verfahren zum Vereinzeln von Mischpost durch die Vereinzelungsstation in einer vorbestimmten zeitlichen Reihenfolge durchzuführen. Die Steuereinheit der Anlegestation und die Steuereinheit der Zuführstation sind jeweils in einem separaten Gehäuse untergebracht und stehen miteinander in kommunikativer Verbindung.

Alternativ weist nur die Zuführstation eine Steuereinheit auf. Ein Computerprogramm ermöglicht der Steuereinheit der Zuführstation eine Datenverarbeitung, nachdem es in Speichermittel der gemeinsamen Steuereinheit geladen worden ist, um ein Verfahren zum Steuern der Transportelemente der Anlegevorrichtung und ein Verfahren zum Vereinzeln von Mischpost durch die Vereinzelungsvorrichtung in einer vorbestimmten zeitlichen Reihenfolge durchzuführen. Die Anlegestation und die Zuführstation sind jeweils in einem separaten Gehäuse untergebracht und weisen jeweils eine Schnittstelle auf. Die Antriebsmittel der Transportelemente der Anlegestation sind mit einer Schnittstelle der Anlegestation elektrisch verbunden und werden über die Schnittstelle der Steuereinheit der Zuführstation aus angesteuert, die mit der Schnittstelle der Anlegestation in kommunikativer Verbindung steht. Die die Anlegestation und die Zuführstation weisen außerdem Sensoren (beispielsweise Lichtschranken) zur Überwachung der Bewegung des Stapels bzw. der flachen Güter und Encoder auf. Die Sensor- und Encodersignale der Anlegestation werden über die Schnittstellen durch die Steuereinheit der Zuführstation abgefragt.

In Verbindung mit der ersten Ausführungsvariante ist ein Computerprogramm vorgesehen, welches eine Datenverarbeitung durch eine gemeinsame Steuereinheit der Anlege- und Vereinzelungsvorrichtungen des Gutverarbeitungsgeräts ermöglicht, nachdem es in Speichermittel der gemeinsamen Steuereinheit geladen worden ist, ein Verfahren zum Steuern der Transportelemente der Anlegevorrichtung und ein Verfahren zum Vereinzeln von flachen Gütern mit unterschiedlichen Format durch die Vereinzelungsvorrichtung in einer vorbestimmten zeitlichen Reihenfolge durchzuführen.

In Verbindung mit der zweiten Ausführungsvariante ist ein Computerprogramm vorgesehen, welches eine Datenverarbeitung durch eine separate Steuereinheit der Anlegestation ermöglicht, nachdem es in Speichermittel der separaten Steuereinheit der Anlegestation geladen worden ist, ein Verfahren zum Steuern der Transportelemente der Anlegevorrichtung durchzuführen und/oder welches eine Datenverarbeitung durch eine separate Steuereinheit der Zuführstation ermöglicht, nachdem es in Speichermittel der separaten Steuereinheit der Zuführstation geladen worden ist, ein Verfahren zum Vereinzeln von flachen Gütern mit unterschiedlichen Format durch die Vereinzelungsvorrichtung in einer vorbestimmten zeitlichen Reihenfolge durchzuführen.

Es ist weiterhin ein Computerprogramm vorgesehen, welches eine Datenverarbeitung durch eine separate Steuereinheit der Zuführstation ermöglicht, nachdem es in Speichermittel der Steuereinheit geladen worden ist, ein Verfahren zum Steuern der Transportelemente der Anlegevorrichtung der Anlegestation und ein Verfahren zum Vereinzeln von flachen Gütern mit unterschiedlichen Format durch die Vereinzelungsvorrichtung der Zuführstation in einer vorbestimmten zeitlichen Reihenfolge durchzuführen.

Es ist außerdem ein computerlesbares Speichermedium vorgesehen, auf dem Programmcode gespeichert ist, der es der separaten oder der gemeinsamen Steuereinheit ermöglicht, nachdem er in Speichermittel der Steuereinheit geladen worden ist, ein Verfahren zum Steuern der Transportelemente der Anlegevorrichtung bzw. Anlegestation und ein Verfahren zum Vereinzeln von flachen Gütern mit unterschiedlichen Format durch die Vereinzelungsvorrichtung bzw. Zuführstation in einer vorbestimmten zeitlichen Reihenfolge durchzuführen.

Wesentliche Verfahrensschritte eines technischen Verfahrens zum Ausrichten und Vereinzeln von Mischpost sind:
a) Ausstatten eines Auflegedecks einer Anlegevorrichtung des Gutverarbeitungsgeräts bzw. einer Anlegestation mit Mitteln zur Kantenausrichtung eines Stapels von flachen Gütern mit unterschiedlichen Format, wobei die vorgenannten Mittel mindestens zwei Transportelemente umfassen, welche ein automatisches Verschieben des Stapels quer zur Transportrichtung und Anlegen des Stapels an die Ausrichtwand sowie einen Transport des Stapels in Transportrichtung zum Zuführdeck der Vereinzelungsvorrichtung sowie ein Verschieben des Stapels entgegen der Transportrichtung ermöglichen,
b) Ausstatten einer Vereinzelungsvorrichtung des Gutverarbeitungsgeräts bzw. der Zuführstation mit einem Bewegungsmittel zur Bewegung eines Teils der Vereinzelungsvorrichtung in eine zur Transportrichtung entgegengesetzten Richtung und
c) Steuerung des Ausrichtungszustandes der Transportelemente der Anlegevorrichtung des Gutverarbeitungsgeräts bzw. der Anlegestation sowie Steuerung der Bewegung des vorgenannten Teils der Vereinzelungsvorrichtung des Gutverarbeitungsgeräts bzw. der Zuführstation, um ein Verschieben des Stapels entgegen der Transportrichtung zu ermöglichen.

Dadurch werden nach einem automatischen Verschieben des Stapels quer zur Transportrichtung und Anlegen des Stapels an die Ausrichtwand bzw. Anlagewand, durch die Bewegungsmittel nun auch diejenigen bereits in die Vereinzelungsschleuse eingefahrenen flachen Güter des Stapel, die im Augenblick noch nicht vereinzelt werden sollen, durch eine Bewegung des Teils der Vereinzelungsvorrichtung in eine zu der Transportrichtung entgegengesetzten Richtung aus der Schleuse wieder herausgelöst. Dabei wird hinsichtlich der Kantenausrichtung der Seitenkanten wieder ein vergleichbarer Zustand des Stapels erreicht, welcher vor dem Abziehen des untersten flachen Guts bestanden hatte.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1,: perspektivische Darstellung eines Gutverarbeitungsgeräts zum Anlegen und Zuführen flacher Güter, von vorn links oben,
- Fig. 2,: perspektivische Darstellung einer Anlegestation, die stromaufwärts einer Zuführstation angeordnet ist, von vorn links oben,
- Fig. 3a,: perspektivische Darstellung einer Anlegestation, von vorn links oben, mit Transportelementen in einem ersten Ausrichtungszustand, nach einem Auflegen eines flachen Guts auf das Zuführdeck,
- Fig. 3b,: perspektivische Darstellung eines Transportelements der Anlegestation, von vorn links oben, in dem ersten Ausrichtungszustand nach einem Auflegen eines flachen Guts auf das Zuführdeck,
- Fig. 4a,: perspektivische Darstellung der Anlegestation, von vorn links oben, mit Transportelementen in einem zweiten Ausrichtungszustand nach einer Kantenausrichtung des flachen Guts,
- Fig. 4b,: perspektivische Darstellung eines Transportelements der Anlegestation, von vorn links oben, in dem zweiten Ausrichtungszustand nach einer Kantenausrichtung des flachen Guts,
- Fig. 5a,: Frontansicht auf eine geschnittene schematische Darstellung einer Zuführstation mit einer Schwinge als Bestandteil eines Bewegungsmittels in Ausgangsposition nach einer ersten Variante und geschnittene Darstellung einer Anlegestation, die stromaufwärts der Zuführstation angeordnet ist, mit Transportelementen in dem ersten Ausrichtungszustand und mit einem Stapel an flachen Gütern auf einem Auflegedeck in einem Zustand vor einem Vereinzeln des Stapels,
- Fig. 5b,: Draufsicht auf einen Teils des Auflegedecks der Anlegestation, mit Transportelementen in dem ersten Ausrichtungszustand und mit einem Stapel an flachen Gütern auf dem Auflegedeck im Zustand vor einem Vereinzeln des Stapels,
- Fig. 6a,: Frontansicht auf eine geschnittene schematische Darstellung einer Zuführstation mit einer Schwinge als Bestandteil eines Bewegungsmittels in Ausgangsposition nach der ersten Variante und geschnittene Darstellung einer Anlegestation, die stromaufwärts der Zuführstation angeordnet ist, mit Transportelementen in dem zweiten Ausrichtungszustand und mit einem Stapel an flachen Gütern auf einem Auflegedeck, nach einer Kantenausrichtung und im Zustand während des Vereinzelns des Stapels,
- Fig. 6b,: Draufsicht auf einen Teils des Auflegedecks der Anlegestation, mit Transportelementen im zweiten Ausrichtungszustand und mit einem Stapel an flachen Gütern auf dem Auflegedeck nach einer Kantenausrichtung des Stapels,
- Fig. 7a,: Frontansicht auf eine geschnittene schematische Darstellung einer Zuführstation mit einer Schwinge als Bestandteil eines Bewegungsmittels nach der ersten Variante in einer Position bei Maximalhub Hmax und geschnittene Darstellung einer Anlegestation, mit einem Stapel an flachen Gütern auf einem Auflegedeck, im Zustand während des Vereinzeins des Stapels sowie nach einer Bewegung des Teils der Vereinzelungsvorrichtung in eine zu der Transportrichtung entgegengesetzten Richtung,
- Fig. 7b,: Draufsicht auf einen Teil des Auflegedecks der Anlegestation, mit einem Stapel an flachen Gütern auf dem Auflegedeck, in demselben Zustand, welcher in Fig. 7a dargestellt wurde,
- Fig. 8a,: Frontansicht auf eine geschnittene schematische Darstellung einer Zuführstation mit dem Bewegungsmittel nach der ersten Variante bei Maximalhub Hmax und geschnittene Darstellung einer Anlegestation, mit einem Stapel an flachen Gütern auf einem Auflegedeck im Zustand eines automatischen Verschiebens des Stapels vor einem Vereinzeln eines weiteren flachen Guts des Stapels,
- Fig. 8b,: Draufsicht auf einen Teil des Auflegedecks der Anlegestation, mit einem Stapel an flachen Gütern auf dem Auflegedeck, in demselben Zustand, welcher in Fig. 8a dargestellt wurde,
- Fig. 9a,: Frontansicht auf eine geschnittene schematische Darstellung einer Zuführstation mit dem Bewegungsmittel in Ausgangsposition nach der ersten Variante und geschnittene Darstellung einer Anlegestation, mit einem Stapel an flachen Gütern auf einem Auflegedeck im Zustand eines automatischen Verschiebens des Stapels quer zur Transportrichtung x,
- Fig. 9b,: Draufsicht auf einen Teils des Auflegedecks der Anlegestation, mit einem Stapel an flachen Gütern auf dem Auflegedeck im Zustand eines automatischen Verschiebens des Stapels quer zur Transportrichtung x,
- Fig. 10,: Frontansicht auf eine geschnittene schematische Darstellung einer Zuführstation mit einem Bewegungsmittel nach einer zweiten Variante in Ausgangsposition,
- Fig. 11,: Frontansicht auf eine geschnittene schematische Darstellung einer Zuführstation mit einem Bewegungsmittel nach der zweiten Variante in einer Arbeitsposition bei Maximalhub Hmax.

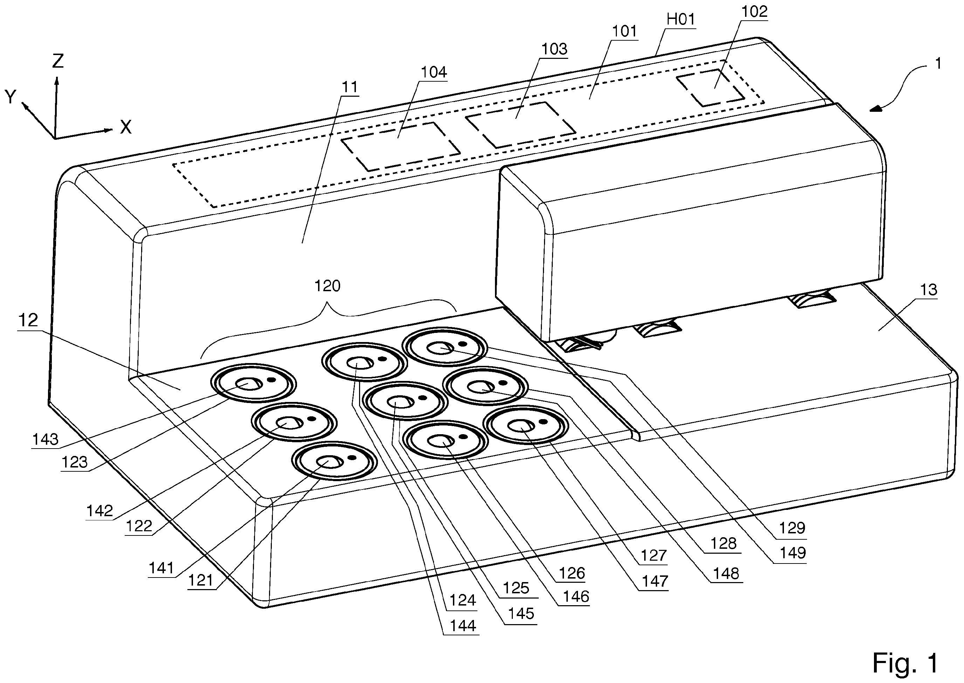

Die Figur 1 zeigt eine perspektivische Darstellung eines Gutverarbeitungsgeräts 1 zum Anlegen und Zuführen flacher Güter, von vorn links oben. In einem Anlege- und Ausrichtbereich ist eine Vielzahl von kreisförmigen Öffnungen 121 ...12x in einem Auflegedeck 12 für eine Vielzahl von Transportelementen 141 ... 14x eingearbeitet. Vorzugsweise ist eine Vielzahl von neun Transportelementen 141 ... 149 vorgesehen, die innerhalb eines Transportfeldes 120 in den Öffnungen 121 ...129 des Auflegedecks angeordnet sind. Das Transportfeld 120 liegt in einer x/y-Ebene eines kartesischen Koordinatensystems. Das Auflegedeck 12 wird in y-Richtung durch eine Ausrichtwand 11 begrenzt, welche sich vom Auflegedeck aufwärts in z-Richtung des kartesischen Koordinatensystems erstreckt. Die Grundfläche des Postverarbeitungsgeräts ist klein, wegen des kleinen Auflegedecks 12. Es hat aufgrund der ausrichtbaren Transportelemente innerhalb des Transportfeldes 120 eine vorteilhaft kleinere Auflagefläche, als ein größtes zu verarbeitendes Format eines flachen Guts. Die Abmaße des Transportfeldes 120 des Auflegedecks 12 entsprechen beispielsweise dem Brief-Format B4. Das Auflegedeck 12 liegt stromaufwärts eines Zuführdecks 13. Das Gutverarbeitungsgerät 1 ist in dieser ersten Ausführungsvariante in einem gemeinsamen Gehäuse H01 untergebracht und hat eine gemeinsame Steuereinheit 101 mindestens mit einem Prozessor 104 und mit Speichermitteln 103 zum Speichern eines Computerprogramms. Das Gutverarbeitungsgerät 1 weist außerdem eine Schnittstelle 102 und - nicht dargestellte - Sensoren zur Überwachung der Bewegung des Stapels bzw. Encoder zur Überwachung des Transports der flachen Güter auf, wobei durch die gemeinsame Steuereinheit 101 die Sensor- und Encodersignale empfangen und ausgewertet werden und Ansteuersignale an die Antriebsmotoren gesendet werden. Die Schnittstelle 102 gestattet - in einer nicht gezeigten Weise - eine kommunikative Verbindung mit einer entsprechenden Schnittstelle eines im Transportpfad in Transportrichtung x nachgeordneten Gutverarbeitungsgeräts, zum Beispiel einer Frankiermaschine, wobei über die Schnittstelle 102 Informationen, Sensorsignale und/oder Steuerungsanweisungen mit dem im Transportpfad nachgeordneten Gutverarbeitungsgerät ausgetauscht werden können.

Alternativ kann das Gutverarbeitungsgerät 1 eine Anlegestation 10 und eine Zuführstation 20 umfassen.

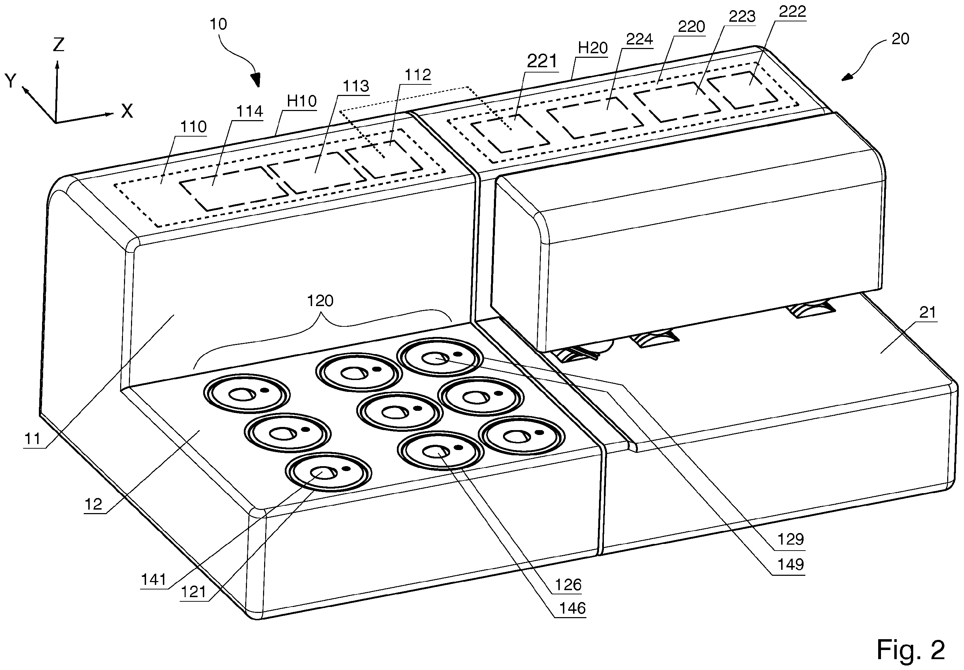

Die Figur 2 zeigt eine perspektivische Darstellung einer Anlegestation 10, die stromaufwärts einer Zuführstation 20 angeordnet ist, von vorn links oben. Im Anlege- und Ausrichtbereich der Anlegestation 10 ist wieder eine Vielzahl von neun Transportelementen 141 - 149 vorgesehen, die in dem Transportfeld 120 des Auflegedecks 12 angeordnet sind. Das Auflegedeck 12 wird in y-Richtung ebenfalls durch eine Ausrichtwand 11 begrenzt und liegt stromaufwärts eines Zuführdecks 21 der Zuführstation 20. In dieser zweiten Ausführungsvariante ist jede Station 10 bzw. 20 in einem separaten Gehäuse H10 bzw. H20 untergebracht und je eine separate Steuereinheit 110 bzw. 220 ist in der Anlegestation 10 bzw. Zuführstation 20 vorgesehen. Jede separate Steuereinheit 110 bzw. 220 ist mindestens mit einem Prozessor 114 bzw. 224 und mit Speichermitteln 113 bzw. 223 zum Speichern eines Computerprogramms ausgestattet. Eine Schnittstelle 221 der Steuereinheit 220 der Zuführstation 20 ist mit einer Schnittstelle 112 der Steuereinheit 110 der Anlegestation 10 kommunikativ verbunden (gepunktete Linie). Beispielsweise können die Stromversorgungseinheit und die Elektronik inclusive einer Leiterplatte der Steuereinheit 110 und Schnittstelle 112 im Zwischenraum zwischen der Ausrichtwand 11 und der Rückwand des Gehäuses H10 der Anlegestation 10 angeordnet werden. Die Antriebsmittel und zugehörige Mechanik zur Lageausrichtung der Transportelemente sind im Zwischenraum zwischen dem Auflegedeck 12 und einer - nicht gezeigten - Bodenplatte der Anlegestation 10 angeordnet und auf einem Chassis bzw. Träger montiert. Eine Schnittstelle 222 dient zur Kommunikationsverbindung mit einer nachfolgenden Gutverarbeitungsstation.

In einer - nicht gezeigten alternativen - dritten Ausführungsvariante braucht nur die Zuführstation eine Steuereinheit aufzuweisen. Die Anlegestation und die Zuführstation sind jeweils mit einer Schnittstelle ausgestattet. Dabei werden die Antriebsmittel der Transportelemente der Anlegestation über die Schnittstelle von der Steuereinheit der Zuführstation aus angesteuert und die Sensor- und Encodersignale der Anlegestation über die Schnittstelle durch die Steuereinheit abgefragt. Die Anlegestation und die Zuführstation weisen außerdem Sensoren und Encoder zur Überwachung der Bewegung des Stapels bzw. der flachen Güter durch die Steuereinheit der Zuführstation auf.

Beim Vereinzeln wird jeweils das unterste flache Gut des Stapels mittels der Anlege- und Zuführstation bzw. in an sich bekannter Weise mittels der Zuführstation in Transportrichtung vom Stapel weg transportiert. Das Ansteuern der Bewegungsmittel der Anlege- und Zuführstation bzw. der Zuführstation zur Bewegung des vorgenannten Teils der Vereinzelungsvorrichtung in eine zur Transportrichtung entgegengesetzten Richtung, erfolgt entweder durch eine gemeinsame Steuereinheit oder stationseigene Steuereinheit der Zuführstation.

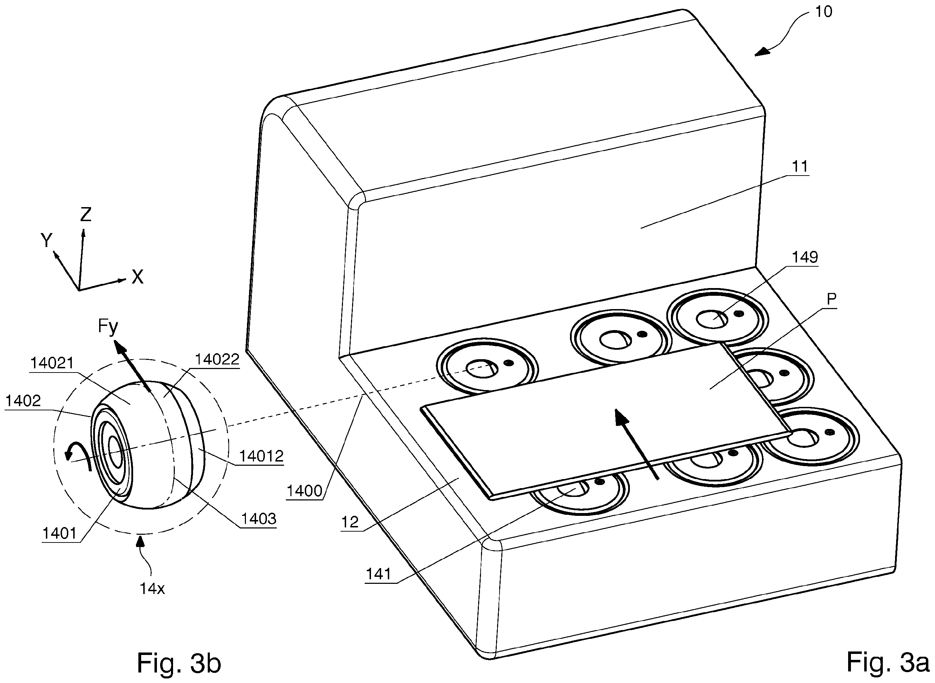

Die Figur 3a zeigt eine perspektivische Darstellung einer Anlegestation 10, von vorn links oben. Nach einem Auflegen eines flachen Guts P auf das Auflegedeck 12 wird das flache Gut P in einen Anlegezustand an der Ausrichtwand 11 gebracht. Die Anlegestation 10 ist zu diesem Zweck mit mindestens zwei Transportelementen 141 und 149 zum automatischen Verschieben des Guts P beziehungsweise eines - nicht dargestellten - Stapels quer zur Transportrichtung x und zum Anlegen einer Seitenkante des Guts P bzw. der Seitenkante eines der flachen Güter des Stapels an die Ausrichtwand ausgestattet. Die Transportelemente ragen durch zugehörige kreisförmige Öffnungen 121 und 129 (wie in Fig.2 gezeigt) in dem Auflegedeck 12 der Anlegestation 10 hindurch, so dass sie mit der Unterseite des flachen Guts P bzw. mit dem untersten flachen Gut P eines aufgelegten Stapels in Reibungskontakt kommen. Die Transportelemente wurden zum automatischen Verschieben des Stapels quer zur Transportrichtung x zuvor in einen ersten Ausrichtungszustand gebracht. Gemäß der Figur 3a ist eine Vielzahl von neun Transportelementen vorgesehen, die in einem Transportfeld angeordnet sind. Zum Antrieb der Transportelemente sind ein Motor und eine zugehörige Mechanik vorgesehen und - in nicht gezeigter Weise - unterhalb des Auflegedecks 12 angeordnet. Mittels des Antriebes können die Transportelemente - in nicht gezeigter Weise - gemeinsam von einer Steuereinheit angesteuert und angetrieben werden. Der Antrieb umfaßt - in nicht gezeigter und ebenfalls unterhalb des Auflegedecks 12 angeordneten Weise - vorzugsweise einen VDC-Motor, welcher von der Steuereinheit auf eine vorgegebene Drehzahl ab einen vorbestimmten Zeitpunkt gesteuert wird. Im Zustand während des Auflegens eines flachen Guts auf das Zuführdeck ist die Drehachse 1400 jedes Transportelements parallel zur x-Richtung des kartesischen Koordinatensystems, also in Transportrichtung ausgerichtet. Jedes Transportelement wirkt somit auf ein flaches Gut quer zur Transportrichtung x, also in y-Richtung.
Ein - nicht gezeigter - ebenfalls von der Steuereinheit angesteuerter Schrittmotor und eine - ebenfalls nicht gezeigte - zugehörige Lageausrichtungs-Mechanik sind vorgesehen, um die Drehachse der Transportelemente gegebenenfalls in eine benötigte andere Position zu drehen. Die Transportelemente werden dadurch in einen zweiten Ausrichtungszustand gebracht, um ein automatisches Verschieben des flachen Guts in einem Winkel zur Transportrichtung x zu ermöglichen. Vorteilhaft kann der Aufwand an zugehöriger Mechanik dadurch verringert werden, dass alle Transportelemente mit einem VDC-Motor und Schrittmotor ausgestattet werden.

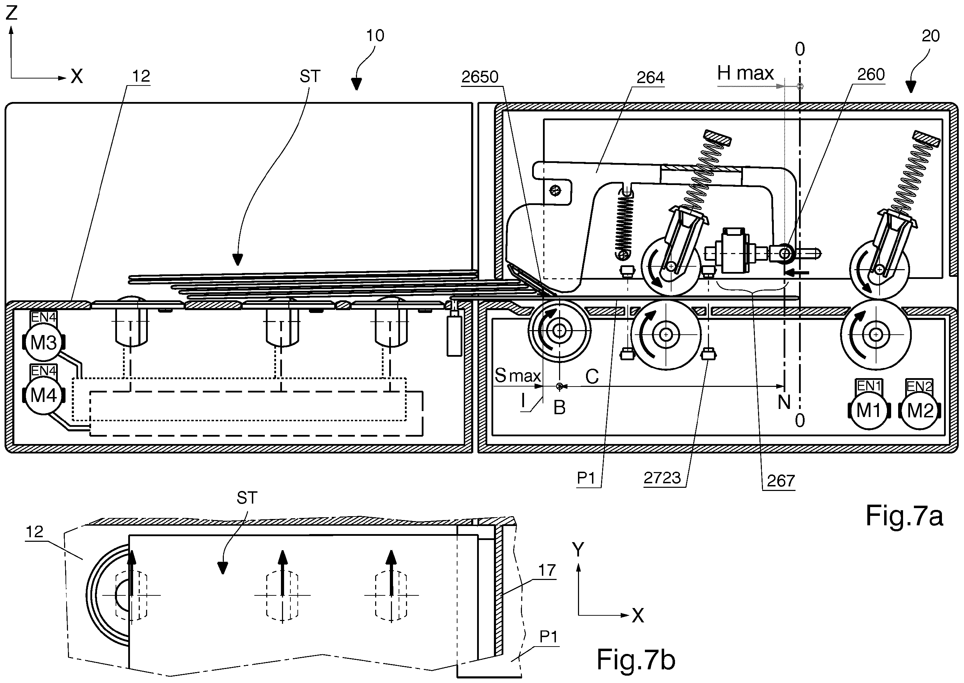

Die Figur 3b zeigt eine perspektivische Darstellung eines Transportelements 14x der Anlegestation, von vorn links oben, in dem ersten Ausrichtungszustand. Das Transportelement besteht aus einer tonnenförmigen Gummirolle 1402 mit einem größten Durchmesser am Tonnenäquator 1403, wobei die Gummirolle unsymmetrisch beidseitig des Tonnenäquators 1403 auf einem Formdrehkörper 1401 aufgebracht worden ist, so dass auf einer Seite vom Tonnenäquator eine breitere Lauffläche 14021 der tonnenförmigen Gummirolle ausgebildet ist, als auf der anderen Seite. Der Formdrehkörper weist auf der vorgenannten anderen Seite eine seitliche Lauffläche 14012 auf, die einerseits bis zum Tonnenboden reicht und die andererseits mit der weniger breiten Lauffläche 14022 der tonnenförmigen Gummirolle 1402 bündig abschließt. Die seitliche Lauffläche 14012 des Formdrehkörpers hat einen viel geringeren Reibkoeffizienten, als die Lauffläche 14021 der Gummirolle. Die Figur 3b zeigt eine Drehung einer Drehachse des Formdrehkörpers um einen Winkel von 0° gegenüber der Transportrichtung x. Die Reibkraft Fy der in Drehrichtung gedrehten tonnenförmigen Gummirolle wirkt deshalb in y-Richtung. Die tonnenförmige Gummirolle in der Anlegestation wird zum automatischen Verschieben des Stapels quer zur Transportrichtung und Anlegen des Stapels an die Ausrichtwand bzw. Anlagewand eingesetzt. Auf die spezielle Funktion der seitlichen Lauffläche des Formdrehkörpers mit dem viel geringeren Reibkoeffizienten wird bei der Beschreibung der Figur 7a und 7b näher eingegangen.

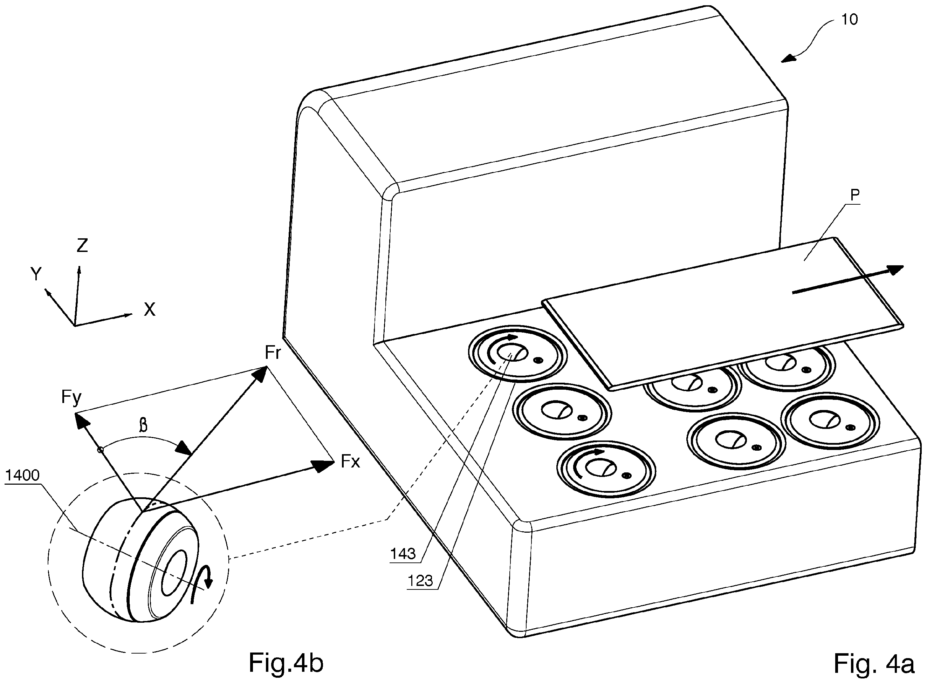

Die Figur 4a zeigt eine perspektivische Darstellung der Anlegestation 10, von vorn links oben. Die Transportelemente wurden nach einer Kantenausrichtung des flachen Guts P in den zweiten Ausrichtungszustand gebracht. Letzterer bewirkt den Transport des flachen Guts in Transportrichtung x, bei Beibehaltung der Ausrichtung des flachen Guts. Die kreisförmigen Öffnungen des Auflagedecks der Anlegestation können in Reihen oder in einem beliebigen Muster vor der Ausrichtwand angeordnet sein. Die Transportelemente 141 ... 149 sind in einem Chassis oder Träger gelagert (nicht gezeigt) und ragen durch die kreisförmigen Öffnungen 121 ... 129 hindurch. Die Transportelemente wurden mittels einer - nicht gezeigten - Mechanik unterhalb des Auflagedecks von einem - nicht gezeigten - Antriebsmotor in die benötigte Position zum Zwecke der Kantenausrichtung gedreht, welche auch einen Vortrieb in Transportrichtung x bei Beibehaltung einer optimalen Ausrichtung des flachen Guts ermöglicht. Dabei wird der Antriebsmotor - in nicht gezeigter Weise - von der Steuereinheit angesteuert, um mittels der Mechanik die Transportelemente gemeinsam in die benötigte Richtung zu drehen. Die Steuereinheit regelt zu einem vorgegeben Zeitpunkt die Geschwindigkeit und den Drehwinkel, mit dem die Mechanik die Transportelemente verstellt.

Die Figur 4b zeigt eine perspektivische Darstellung eines Transportelements 143 der Anlegestation, von vorn links oben, in dem zweiten Ausrichtungszustand, der nach einer Kantenausrichtung des flachen Guts zur Erzielung eines bestimmten Transportzustandes von dem Transportelement 143 eingenommen wird. Durch eine Drehung der Drehachse 1400 des Transportelements 143 um einen Winkel von -ß gegenüber der Transportrichtung x existiert eine resultierende Reibkraft Fr der tonnenförmigen Gummirolle in einer Wirkrichtung im Winkel von 90°- ß zur Transportrichtung x, nachdem das innerhalb der kreisförmigen Öffnung 123 drehbar gelagerte Transportelement 143 in die gewünschte Wirkrichtung gedreht wurde. Eine Reibkraft-Komponente Fx der tonnenförmigen Gummirolle wirkt weiter in x-Richtung und eine Reibkraft-Komponente Fy der tonnenförmigen Gummirolle wirkt zusätzlich in y-Richtung. Die resultierende Reibkraft-Komponente Fr liegt am Äquator der tonnenförmigen Gummirolle in einem Winkel von -ß zur y-Richtung.

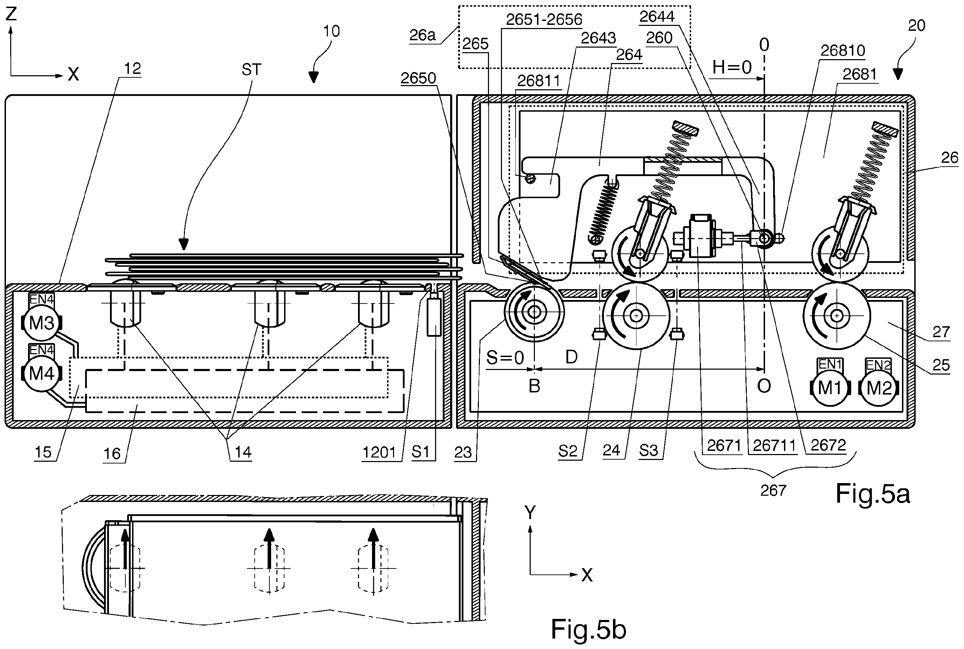

Die Figur 5a zeigt eine Frontansicht auf eine geschnittene schematische Darstellung einer Zuführstation 20 mit einer Schwinge als Bestandteil eines Bewegungsmittels in Ausgangsposition nach einer ersten Variante und geschnittene Darstellung einer Anlegestation 10, die stromaufwärts der Zuführstation angeordnet ist, mit einem Stapel ST an flachen Gütern auf einem Auflegedeck 12, mit einem ersten Ausrichtungszustand der Transportelemente vor einem Vereinzeln des Stapels. Das Bewegungsmittel besteht aus einer Bewegungsmechanik 26a der Vereinzelungsvorrichtung und einem Antriebsmodul 267. Die Bewegungsmechanik 26a dient zur Bewegung eines Anlaufbleches 265 einer modifizierten Schwinge 264 der Zuführstation 20 in Transportrichtung x und entgegengesetzt zu der x-Richtung. Die Bewegungsmechanik 26a umfasst mindestens die Mittel 260, 264, 2643, 2644, 265 und 2651-2655 und wird durch im Andruckkasten vorgesehene Führungsmittel geführt.

Eine Vereinzelungswalze 23 der Hauptschleuse wird durch einen ersten Motor M1 über eine - in nicht gezeigter Weise - an einem Gestell 27 montierten Mechanik angetrieben. Eine angetriebene erste Transportwalze 24 und eine poststromabwärts angeordnete angetriebene zweite Transportwalze 25 werden durch einen zweiten Motor M2 über eine - in nicht gezeigter Weise - an einem Gestell montierten Mechanik angetrieben. Ein Sensor S2 ist stromaufwärts und ein Sensor S3 ist stromabwärts der ersten Transportwalze 24 orthogonal zum Transportpfad angeordnet. Auf den Motorwellen der Motoren M1 und M2 sind - in nicht gezeigter Weise - Encoderscheiben für einen ersten Encoder EN 1 und zweiten Encoder EN2 montiert. Mindestens die Sensoren S2, S3, die Encoder EN1, EN2 und die Motoren M1, M2 sind mit der - nicht gezeigten - Steuereinheit zu deren Abfrage bzw. Ansteuerung elektrisch in bekannter - nicht gezeigten Weise - verbunden. Genauere Ausführungen hierzu können dem deutschen Gebrauchsmuster DE 20 2012 011 877 U1 entnommen werden.

Die Unterschiede ergeben sich durch das o.g. Bewegungsmittel, welches das vorgenannte Antriebsmodul 267 umfaßt, das zu dessen Ansteuerung - in nicht gezeigter Weise - mit der Steuereinheit elektrisch verbunden ist. Gegenebenfalls kann ein weiterer Sensor (nicht gezeigt) zur Überwachung der Bewegung des Bewegungsmittels vorgesehen und mit der Steuereinheit elektrisch verbunden sein.

Im Vereinzelungsbereich und im vertikalen Abstand über dem Spalt ist eine Aussparung 2643 am oberen Teil des Kopfes der Schwinge 264 eingearbeitet, welche in dem gezeichneten Zustand in z-Richtung durch eine annähernd horizontale Ebene begrenzt ist, die parallel zum Zuführdeck liegt und zur Führung der Schwinge dient.

Die Aussparung 2643 gerät in einen Anschlag mit einem ersten Anschlagselement 26811. Ein zweites Anschlagelement 26812 (nicht gezeigt) ist - in nicht gezeigter Weise - an einer Seitenwand des Andruckkastens 26 montiert, wie ebenso das erste Anschlagselement 26811. Die Anschlagelemente 26811, 26812 sind schwingungsdämpfend am Andruckkasten 26 montiert und bestehen aus einem Metallstift oder einem Winkelstück, die in einer - nicht gezeigten Weise - dazu ausgebildet sind, um einen zu harten Anschlag beispielsweise via Gummipuffer zu absorbieren.

Das Zuführdeck liegt parallel zur x/y-Ebene. Die annähernd horizontale Ebene der Aussparung 2643 begrenzt die Bewegung der Schwinge 264 und damit der Vereinzelungsfinger 2651 - 2656 sowohl nach unten, aber lässt auch eine Bewegung der Schwinge in Transportrichtung x und entgegengesetzt dazu zu.

Eine Drehachse 2600 (nicht dargestellt) der Schwinge 264 ist in einem stromabwärts gerichteten Teil des Andruckkastens 26 - in einer nicht näher dargestellten Weise - vorgesehen und verläuft durch den Kreismittelpunkt einer Drehachswelle 260, welche mit einem stromabwärts gerichteten Ende 2644 der Schwinge drehbar montiert ist. Die Drehachswelle 260 ist parallel zur y-Richtung ausgerichtet und ebenfalls in Transportrichtung x und entgegengesetzt dazu verschiebbar in einem Langloch 26810 einer Seitenwand 2681 des Andruckkastens 26 geführt. Die Vereinzelungswalze 23 hat eine Drehachse, deren Kreismittelpunkt orthogonal zu einem Wegpunkt B liegt und auf dem Transportpfad abbildbar ist. Ein Bezugspunkt 2650 auf der Anlaufblechkante liegt dem Wegpunkt B orthogonal gegenüber.

Der Kreismittelpunkt der Drehachswelle 260 liegt orthogonal zu einem Wegpunkt O auf dem Transportpfad, wobei der Kreismittelpunkt im Nullpunkt 0 liegt, an welchem die Drehachswelle 260 einem Hub H = 0 ausgesetzt ist. Der Wegpunkt O liegt in Transportrichtung x in einem Abstand D zum Wegpunkt B. Die derart modifizierte Schwinge 264 des Andruckkastens eignet sich als Bewegungsmittel der Zuführstation, wobei der Andruckkasten 26 mit einem Antriebsmodul 267 und mit zugehöriger Mechanik zum Verschieben der Drehachse der Schwinge ausgestattet ist. In einer ersten Ausführungsform ist der Antriebsmodul 267 als Linearschrittmotor 2671 mit einer linear bewegbaren Antriebsstange 26711 ausgebildet, deren Ende mit einem Adapterstück 2672 verbunden ist. Die Drehachswelle 260 wird einerseits in dem Langloch 26810 der Seitenwand 2681 und andererseits - in nicht gezeigter Weise - in einem Langloch 26820 einer gegenüberliegenden Seitenwand 2682 geführt, wobei die Seitenwände in Inneren des Andruckkastens 26 angeordnet sein können. Das stromabwärts gerichtete Ende 2644 der Schwinge 264 ist um die Drehachswelle 260 drehbar gelagert. Zugleich ist die Drehachswelle 260 formschlüssig mit dem Adapterstück 2672 verbunden, so dass die Schwinge mit einem vorbestimmten Hub in Transportrichtung und entgegengesetzt dazu bewegt werden kann. Der Spalt zwischen der Vereinzelungswalze 23 und dem Anlaufblech 265, an welchen die Vereinzelungsfinger 2651 - 2656 befestigt sind, tritt in dem Punkt B des Transportpfades auf und ist minimal, wenn der Linearschrittmotor 2671 in eine Ruheposition verfahren wurde und noch kein flaches Gut in den Spalt eingetreten ist. In der Ruheposition ist die linear bewegbare Antriebsstange 26711 in Transportrichtung x voll ausgefahren.

Alternativ zum Linearschrittmotor eignen sich auch andere - nicht gezeigte - Mittel, wie Hubmagnet oder ein Stellmotor als Antriebsmodul zum Verschieben der Drehachswelle 260 der Schwinge.

Die Transportelemente 14 der Anlegestation 10 werden durch einen dritten Motor M3 in ihrer Lage ausgerichtet und durch einen vierten Motor M4 angetrieben, um das flache Gut zu bewegen, wobei beide Motoren M3 und M4 mit einer zugehörigen Mechanik 15 und 16 unterhalb des Auflegedecks 12 der Anlegestation 10 angeordnet und - in nicht gezeigter Weise - an einem Chassis der Anlegestation 10 montiert sind. Mindestens ein erster Sensor S1 ist stromabwärts der Transportelemente unterhalb des Auflegedecks 12 in einer Öffnung 1201 montiert. Auf den Motorwellen der Motoren M3 und M4 sind ebenfalls - in schematisch gezeigter Weise - Encoderscheiben für einen dritten Encoder EN3 und vierten Encoder EN4 montiert. Mit einer - in nicht gezeigten - Steuereinheit sind zu deren Abfrage mindestens der erste Sensor S1, die Encoder EN3, EN4 und die Motoren M3, M4 sind zu deren Ansteuerung elektrisch in einer bekannten aber nicht gezeigten Weise verbunden. Die Figur 5b zeigt eine Draufsicht auf einen Teil des Auflegedecks der Anlegestation, mit einem Stapel an flachen Gütern auf dem Auflegedeck im ersten Ausrichtungszustand der Transportelemente vor einem Vereinzeln des Stapels.

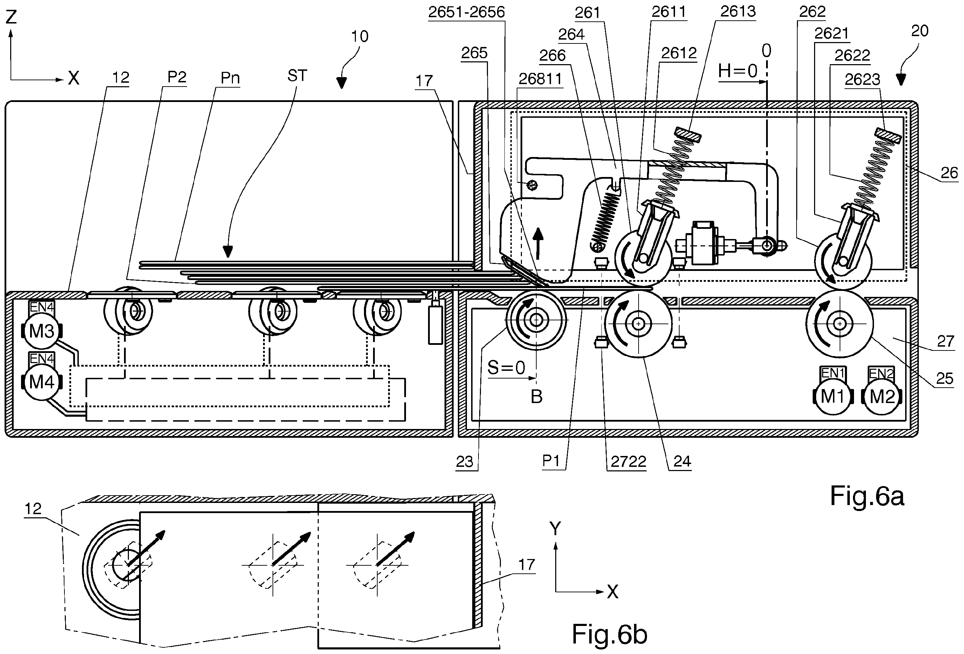

Die Figur 6a zeigt eine Frontansicht auf eine geschnittene schematische Darstellung einer Zuführstation 20 mit einer Schwinge 264 als Bestandteil eines Bewegungsmittels in Ausgangsposition nach der ersten Variante und geschnittene schematische Darstellung der Anlegestation 10, die stromaufwärts der Zuführstation 20 angeordnet ist. In der Ausgangsposition ist die Schwinge 264 einem Hub H = 0 ausgesetzt. Auf dem Auflagedeck 12 der Anlegestation 10 ist ein Stapel ST an flachen Gütern aufgelegt dargestellt, der nach einer Kantenausrichtung seiner einen Seitenkante nun nach einem Umsteuern der Ausrichtung der Transportelemente in den zweiten Ausrichtungszustand, nun in eine Lage gelangt, um vereinzelt werden zu können. Das Vereinzeln des Stapels ist eine aus dem deutschen Gebrauchsmuster DE 20 2012 011 877 U1 bekannte Funktion einer ersten Vereinzelungswalze, deren Funktion nun erfindungsgemäß nun durch die Transportelemente der Anlegestation übernommen wird, so dass die erste Vereinzelungswalze der Zuführstation gemäß dem deutschen Gebrauchsmuster DE 20 2012 011 877 U1 ganz entfallen kann.

Der obere Teil des Stapels ST wird von der posteingangsseitigen Wand 17 des oberen Gehäuseteils der Zuführstation 20 zurückgehalten, während der untere Teil des Stapels ST bis zur Hauptschleuse gelangt, in welche das unterste flache Gut P1 der flachen Güter P2-Pn des Stapels ST eingezogen wird. Als zweiter Sensor S2 (Fig.5a) wird zum Beispiel eine Lichtschranke 2722 (Fig.6a) verwendet. Die Vorderkante des flachen Guts P1 unterbricht einen Lichtstrahl der Lichtschranke 2722. Das Sensorsignal wird in einer - prinzipiell aus DE 202012011877 U1 bekannten aber in der Figur 6a nicht gezeigten Weise - durch eine Steuereinheit ausgewertet, beispielsweise um die Position des flachen Guts P1 festzustellen. Die Vorschleuse ist vorzugsweise mehrstufig ausgebildet. Vor und oberhalb des Spalts der Hauptschleuse ist - in einer aus DE 202012011877 U1 bekannten aber in der Figur 6a nicht gezeigten Weise - eine Stapelanschlagsfläche am Vorvereinzelungsblech vorgesehen. Das Vorvereinzelungsblech ist - in einer nicht gezeigten Weise - an dem Gestell 27 befestigt. Am Vorvereinzelungsblech ist - in einer nicht gezeigten Weise - mindestens ein flexibler Vorvereinzelungsfinger befestigt, was ebenfalls aus dem DE 202012011877 U1 bekannt ist. Die Stapelanschlagsfläche des Vorvereinzelungsblechs soll den Eintritt von mehreren dünnen flachen Gütern in den Spalt verhindern. Bei einem Eintritt des untersten flachen Guts der Vielzahl von dünnen flachen Gütern des Stapels in den Spalt wird die Schwinge entgegen einer Federkraft einer Zugfeder 266 nur soweit in z-Richtung (schwarzer Pfeil) um einen Betrag angehoben, der genügt, um das zu vereinzelne eine flache Gut P1 am Boden des Stapels durch den Spalt der Hauptschleuse hindurch zu schleusen. An dem Anlaufblech 265 wird mindestens das nächste zu vereinzelne eine flache Gut P2 zurückgehalten. Gegebenenfalls werden einige von mehreren dünnen flachen Gütern zurückgehalten, falls das durch die - nicht gezeigten - flexiblen Vorvereinzelungsfinger nicht bereits verhindert werden kann. Das stromabwärts nachfolgend am Kopf der Schwinge angeordnete Anlaufblech 265, an welchen auch die flexiblen Vereinzelungsfinger 2651-2654 befestigt sind, bildet zusammen mit der - aus der DE 202012011877 U1 bekannten - Vereinzelungswalze 23 die Hauptschleuse.

Das Anschlagselement 26811 ist am Andruckkasten 26 befestigt. Die zu einem Anschlagen der Schwinge 264 benötigte Zugkraft wird durch eine Zugfeder 266 aufgebracht, die einerseits innerhalb des Andruckkastens 26 und andererseits an der Schwinge 264 montiert ist. Eine nicht angetriebene erste Andruckwalze 261 des Andruckkastens 26 ist zwischen den beiden Schenkeln einer ersten Wippe 2611 angeordnet. Auf der Mitte der Wippe 2611 ist eine erste Druckfeder 2612 montiert, die sich an einer ersten Andruckkastenstützwand 2613 innerhalb des Andruckkastens 26 abstützt, die im Oberteil des Andruckkastens 26 angeordnet ist. Die auf der Wippe 2611 angeordnete nicht angetriebene erste Andruckwalze 261 steht der angetriebenen ersten Transportwalze 24 gegenüber. Der Andruckkasten 26 weist poststromabwärts eine nicht angetriebene zweite Andruckwalze 262 auf. Sie ist in der gleichen gezeigten Weise auf einer Wippe 2621 montiert. Eine zweite Druckfeder 2622, die zwischen einer zweiten Wippe 2621 und einer zweiten Andruckkastenstützwand 2623 innerhalb des Andruckkastens 26 montiert ist, stellt sicher, dass auch die zweite Andruckwalze 262 ebenfalls federnd im Andruckkasten 26 angeordnet ist. Die zweite Andruckwalze 262 steht der angetriebenen zweiten Transportwalze 25 gegenüber. Die Vereinzelungswalze 23 und Transportwalzen 24 und 25 sind - in einer in der Figur 6a nicht gezeigten Weise - zwischen einer Gestellvorderwand und der Gestellrückwand des Gestells 27 angeordnet.

Die Figur 6b zeigt eine Draufsicht auf einen Teil des Auflegedecks der Anlegestation, mit Transportelementen im zweiten Ausrichtungszustand und mit einem Stapel an flachen Gütern auf dem Auflegedeck 12 nach einer Kantenausrichtung des Stapels und nach einem Weitertransport des Stapels in die Transportrichtung x. Der obere Teil des Stapels liegt im Ergebnis des Weitertransports bereits an der posteingangsseitigen Gehäusewand 17 der Zuführstation an. Ein Eintritt von mehreren dünnen flachen Gütern in die Zuführstation bis vor den Spalt ist aber nicht gezeichnet. Der Ausrichtungszustand der Transportelemente entspricht demjenigen, der bereits in den Figuren 4a und 4b dargestellt wurde.

Die Figur 7a zeigt eine Frontansicht auf eine geschnittene schematische Darstellung einer Zuführstation 20 mit einer Schwinge 264 als Bestandteil eines Bewegungsmittels nach der ersten Variante in einer Position bei Maximalhub Hmax und eine geschnittene schematische Darstellung einer Anlegestation 10, die stromaufwärts der Zuführstation angeordnet ist. Die Transportelemente sind im ersten Ausrichtungszustand und verhindern damit einen Weitertransport des Stapels in die Transportrichtung x. Jedoch das zu vereinzelnde eine flache Gut P1 am Boden des Stapels ST kann weiterhin vereinzelt und in die Transportrichtung x transportiert werden.
Die Schwinge 264 der Zuführstation 20 ist entgegen der Transportrichtung x verschoben worden. Der Kreismittelpunkt der Drehachswelle 260 liegt nun orthogonal zu einem Wegpunkt N auf dem Transportpfad. Zwischen dem Wegpunkt B und dem Wegpunkt N liegt nun ein Abstand C, wobei C < D ist. Der Abstand D geht aus Fig. 5a hervor. Ein Bezugspunkt 2650 auf der Seitenkante des Anlaufblechs 265 liegt nun einem Wegpunkt I orthogonal gegenüber, der dem Wegpunkt B auf dem Transportpfad vorgelagert ist. Eine Verschiebestrecke Smax ergibt sich aus der Differenz der Abstände D - C bzw. aus dem Abstand der Wegpunkte I und B. Es wird gezeigt, wie aufgrund der Bewegung der Schwinge entgegen der Transportrichtung x, die zurückgehaltenen dünnen flachen Güter des Stapels ST am Eintritt in den Spalt gehindert werden, da die Vereinzelungswalze nicht mehr im Kontakt mit dem Stapel steht. Das Antriebsmittel 267 kann aus einem Linearschrittmotor oder aus - nicht gezeigten - alternativen Mitteln bestehen, welche mit der - nicht gezeigten - Steuereinheit steuerungsmäßig verbunden sind, die ein Verschieben der Schwinge und damit des oberen Teils der Hauptschleuse um die Verschiebestrecke Smax von ca. 10 mm entgegen der Transportrichtung x steuert, wenn der richtige Zeitpunkt dazu gekommen ist. Der auf dem Auflegedeck 12 liegende Stapel ST an flachen Gütern ist - nach einer Bewegung des Teils der Vereinzelungsvorrichtung in eine zu der Transportrichtung x entgegengesetzten Richtung - in einem zurückgeschobenen Zustand gezeichnet, während das unterste dünne Gut P1 des Stapels ST weiter vereinzelt wird. Als Antriebsmittel 267 ist ein Linearschrittmotor mit einer linear bewegbaren Antriebsstange dargestellt, die im zurückgezogenem Zustand (schwarzer Pfeil) einen Maximalhub Hmax liefert. Der richtige Zeitpunkt für einen Maximalhub Hmax zum Verschieben der Schwinge 264 ist gekommen, wenn das zu vereinzelnde eine flache Gut P1 am Boden des Stapels ST den Spalt der Hauptschleuse schon mehrere Millimeter durchlaufen hat und die Vorderkante des flachen Guts eine Lichtschranke 2723 des dritten Sensors S3 (Fig.5a) erreicht. Bei einer Durchlichtschranke unterbricht die Vorderkante des flachen Guts den Lichtstrahl der Lichtschranke, was in der Steuereinheit bei der Auswertung des Sensorsignals festgestellt wird. In Vorbereitung des Verschiebens des Stapels in den zurückgeschobenen Zustand, muss der erste Ausrichtungszustand der Transportelemente der Anlegestation erreicht bzw. wieder hergestellt werden, in welchem die Richtung der Drehachse des Formdrehkörpers mit der Transportrichtung x übereinstimmt, wodurch ein Verschieben des Stapels entgegen der Transportrichtung x ermöglicht wird. Dabei wird die seitliche Lauffläche des Formdrehkörpers der Transportelemente in eine Position stromabwärts der tonnenförmigen Gummirolle gebracht. Die seitliche Lauffläche des Formdrehkörpers liegt stromabwärts in Transportrichtung x und hat einen viel geringeren Reibkoeffizienten. Für das Verschieben des Stapels entgegen der Transportrichtung wird eine geringere Kraft benötigt, weil das unterste Poststück beim Auflaufen auf die seitliche Lauffläche eines Formdrehkörpers über dessen Oberfläche gleiten kann. Der dafür erforderliche erste Ausrichtungszustand der Transportelemente entspricht demjenigen, der bereits in den Figuren 1 bis 3b dargestellt wurde.

Die Figur 7b zeigt eine Draufsicht auf einen Teil des Auflegedecks der Anlegestation, mit einem Stapel an flachen Gütern auf dem Auflegedeck, in demselben Zustand, welcher in Fig. 7a dargestellt wurde. Die Transportelemente sind im ersten Ausrichtungszustand dargestellt. Der Stapel ST an flachen Gütern auf dem Auflegedeck 12 befindet sich in einem Zustand des Vereinzelns des untersten flachen Guts P1 des Stapels. Aber der obere Teil des Stapels liegt nun nicht mehr an der posteingangsseitigen Gehäusewand 17 der Zuführstation an, da der Stapel entgegen der Transportrichtung x zurückgeschoben wurde.

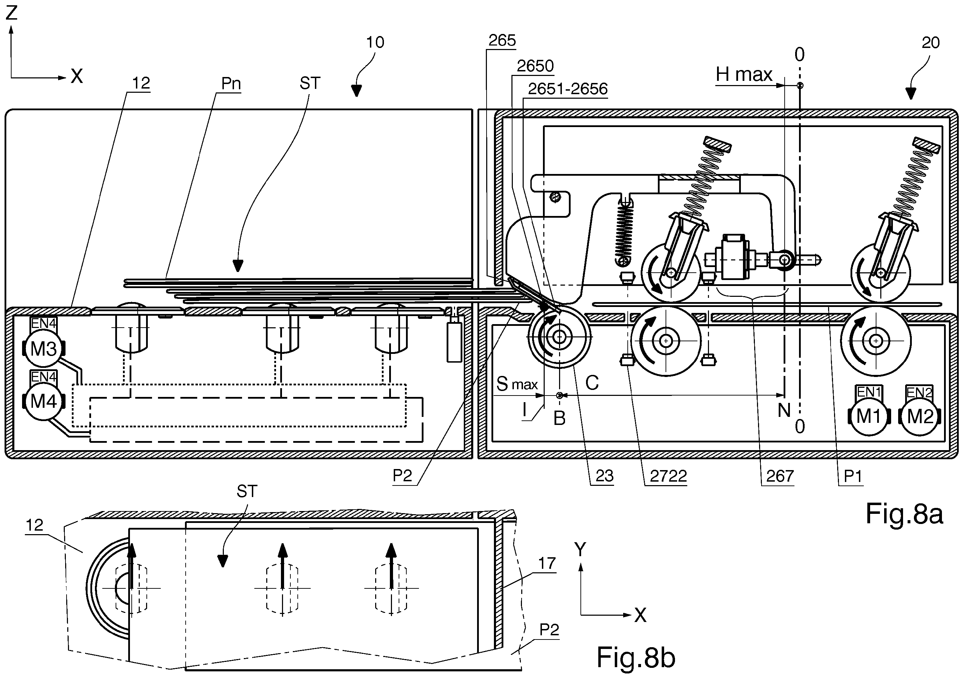

Die Figur 8a zeigt eine Frontansicht auf eine geschnittene schematische Darstellung einer Zuführstation 20 mit einer Schwinge 264 als Bestandteil eines Bewegungsmittels nach der ersten Variante bei Maximalhub Hmax und geschnittene Darstellung einer Anlegestation 10, die stromaufwärts der Zuführstation angeordnet ist, mit Transportelementen im ersten Ausrichtungszustand. Die Transportelemente verhindern im ersten Ausrichtungszustand einen Weitertransport des Stapels auf dem Auflegedeck 12 in die Transportrichtung x. Aus dem Stapel an flachen Gütern auf dem Auflegedeck wurde ein unterstes am Boden liegendes flaches Gut P1 vereinzelt und ist vollständig aus der Hauptschleuse stromabwärts herausgefahren. Die Schwinge 264 ist ein verschiebbares Teil der Vereinzelungsvorrichtung und die Vereinzelungswalze 23 ein anderes nicht verschiebbares Teil der Vereinzelungsvorrichtung. Die Verschiebebewegung des Bewegungsmittels um den Verschiebeweg Smax wird durch den Hub Hmax des Antriebsmittels 267 verursacht. Der Bezugspunkt 2650 auf der Seitenkante des Anlaufblechs 265 liegt nun einem Wegpunkt I orthogonal gegenüber, der dem Wegpunkt B auf dem Transportpfad vorgelagert ist. Aufgrund der Bewegung des verschiebbaren Teils der Vereinzelungsvorrichtung in eine zu der Transportrichtung x entgegengesetzten Richtung wird auch der Stapel P2 - Pn an flachen Gütern auf dem Auflegedeck 12 um den Verschiebeweg Smax zurückgeschoben und in einen ähnlichen Zustand wie vor einem Vereinzeln eines flachen Guts des Stapels gebracht, welcher dem Ausgangszustand des flachen Guts entspricht, der in den Figuren 3a und 3b dargestellt wurde. Die Vorderkante eines gezeigten weiteren flachen Guts P2 des Stapels ST wurde aus dem Spalt der Hauptschleuse wieder herausgeschoben. Die Hauptschleuse besteht aus der Vereinzelungswalze 23 und den flexiblen Vereinzelungsfinger 2651-2654, die an dem Anlaufblech 265 montiert sind. Eine Hinterkante des flachen Guts P1 gibt einen Lichtstrahl der ersten Lichtschranke 2722 wieder frei, wenn das vereinzelte flache Gut P1 am Boden des Stapels ST den Spalt der Hauptschleuse schon mehrere Millimeter verlassen hat. Es ist vorgesehen, dass die Vereinzelungsvorrichtung eine Vereinzelungswalze 23 aufweist und dass die Bewegung des Teils der Vereinzelungsvorrichtung entgegengesetzt zur x-Richtung in einem Verschiebebereich erfolgt, der mindestens 20% - 100% des Radius der Vereinzelungswalze 23 beträgt. Vorzugsweise ist die maximale Verschiebung mindestens halb so groß wie der Radius der Vereinzelungswalze 23.

Die Figur 8b zeigt eine Draufsicht auf einen Teil des Auflegedecks der Anlegestation, mit einem Stapel ST an flachen Gütern auf dem Auflegedeck 12, in demselben Zustand, welcher in Fig. 8a dargestellt wurde. Der obere Teil des Stapels wurde nach dem Vereinzeln eines flachen Guts des Stapels aufgrund einer Bewegung des verschiebbaren Teils der Vereinzelungsvorrichtung in eine zu der Transportrichtung x entgegengesetzten Richtung auf das Auflegedeck 12 zurückgeschoben. Der obere Teil des Stapels liegt deshalb nicht mehr an der posteingangsseitigen Gehäusewand 17 der Zuführstation an. Das nächste zu vereinzelnde flache Gut P2 liegt mit seiner Hinterkante am Boden des Stapels auf dem Auflegedeck 12. Die Vorderkante des flachen Guts P2 und eventuell weiterer flacher Güter des unteren Teils des Stapels ST wurden aus dem Spalt der Hauptschleuse wieder herausgeschoben. Das nächste flache Gut P2 ragt aber noch mit seiner Vorderkante in den Eingangsbereich der Zuführstation aber liegt nicht an der Vereinzelungswalze 23 der Schleuse an. Die Transportelemente sind im ersten Ausrichtungszustand und gestrichelt dargestellt, da diese unterhalb des Stapels an flachen Gütern vorgesehen sind. Der erste Ausrichtungszustand der Transportelemente besteht während des automatischen Verschiebens des Stapels, bevor ein erneutes Vereinzeln eines weiteren flachen Guts des Stapels ausgelöst wird und ist mit dem ersten Ausrichtungszustand gemäß den Figuren 3a, 3b, 5a und 5b vergleichbar.

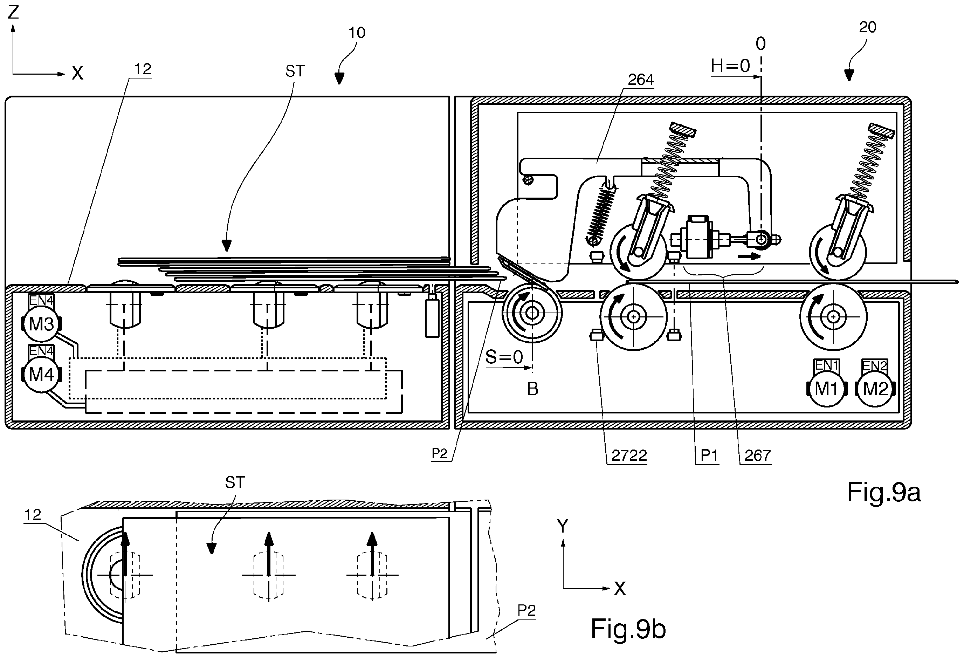

Die Figur 9a zeigt eine Frontansicht auf eine geschnittene schematische Darstellung einer Zuführstation 20 mit einer Schwinge 264 als Bestandteil eines Bewegungsmittels in Ausgangsposition nach der ersten Variante und geschnittene Darstellung einer Anlegestation 10, die stromaufwärts der Zuführstation 20 angeordnet ist, mit Transportelementen im ersten Ausrichtungszustand und mit einem Stapel ST an flachen Gütern auf einem Auflegedeck 12 im Zustand eines automatischen Verschiebens des Stapels quer zur Transportrichtung x. Nach einem automatischen Verschieben des Stapels entgegen der Transportrichtung x und Querverschieben des Stapels wird ein ähnlicher Zustand erreicht, wie nach einem automatischen Verschieben des Stapels quer zur Transportrichtung x gemäß der Figuren 3a, 3b, 5a und 5b. Die Vorderkante des flachen Guts P2 und eventuell weiterer flacher Güter des unteren Teils des Stapels ST wurden aus dem Spalt der Hauptschleuse wieder herausgeschoben, aber ragen aber noch mit der Vorderkante in den Eingangsbereich der Zuführstation. In der Ausgangsposition der Schwinge 264 sind der Hub H und der Verschiebeweg S gleich Null. Durch die Steuerungseinheit (nicht dargestellt) wird zu einem gegebenen Zeitpunkt das Antriebsmittel 267 entsprechend angesteuert. Der Ansteuerzeitpunkt ist erreicht, sobald die Hinterkante des flachen Guts P1 die erste Lichtschranke 2722 verlassen hat. Dadurch wird der Lichtstrahl der ersten Lichtschranke 2722 wieder freigegeben. Die Steuereinheit (nicht gezeigt) der Zuführstation fragt die erste Lichtschranke 2722 immer wieder ab und stellt fest, ob der Lichtstrahl der ersten Lichtschranke 2722 wieder freigegeben wurde. Nun ist ein automatisches Verschieben des Stapels quer zur Transportrichtung x möglich und ein zu dem in der Fig.5a gezeigten Zustand vergleichbarer Zustand wird durch die Steuereinheit hergestellt.

Die Figur 9b zeigt eine Draufsicht auf einen Teils des Auflegedecks der Anlegestation, mit einem Stapel ST an flachen Gütern auf dem Auflegedeck 12 im Zustand eines automatischen Verschiebens des Stapels quer zur Transportrichtung vor einem Vereinzeln des nächsten flachen Guts P2 des Stapels.

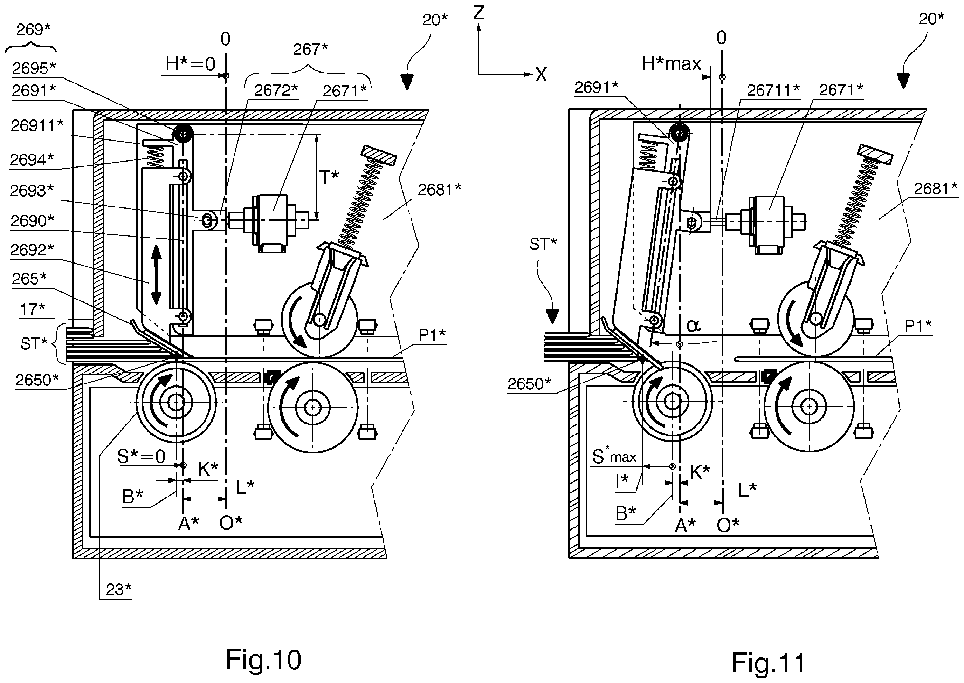

Die Figur 10 zeigt eine Frontansicht auf eine geschnittene schematische Darstellung einer Zuführstation 20* mit einem Bewegungsmittel nach einer zweiten Variante, in einer Ausgangsposition. Das Bewegungsmittel besteht aus einem Antriebsmodul 267* mit zugehöriger Bewegungsmechanik 269* zur Bewegung eines Anlaufbleches 265* in Transportrichtung x und entgegengesetzt zur x-Richtung. Die Mechanik besteht aus einem schwenkbaren Hebelarm 2691* mit einem verschiebbaren Kopfstück 2692*, welches in den Vereinzelungsbereich hineinragt. An dem einen Ende des Hebelarms ist das Kopfstück 2692* federnd montiert, wobei eine Druckfeder 2694* in einer Bohrung des Kopfstücks 2692* gesteckt ist, die sich an einer Hebelarmabwinkelung 26911* am anderen Ende des Hebelarms abstützt. Das andere Ende des Hebelarms ist in einem vertikalen Abstand (in z-Richtung) über dem Vereinzelungsspalt mechanisch mit einer Lagerwelle 2695* verbunden, die an zwei Seitenwänden des Andruckkastens drehbar gelagert ist. Davon ist nur eine Seitenwand 2681* dargestellt und eine weitere Seitenwand 2682* wurde nicht dargestellt. Der Mittelpunkt der Lagerwelle 2695*, die - in nicht dargestellter Weise - parallel zur y-Achse des kartesischen Koordinatensystems ausgerichtet ist, wird nachfolgend als Angelpunkt bezeichnet. Der Hebelarm 2691* weist in Längsrichtung der Länge des Hebelarms eine Führungskulisse 2690* für das federnd montierte Kopfstück 2692* auf, wobei an dem Kopfstück 2692* das Anlaufblech 265* montiert ist, welches zusammen mit einer Vereinzelungswalze 23* die Hauptschleuse der Vereinzelungsvorrichtung bildet. Die Vereinzelungswalze 23* der Hauptschleuse hat eine Drehachse (nicht dargestellt), deren Kreismittelpunkt orthogonal zu einem Wegpunkt B* liegt, der auf dem Transportpfad abbildbar ist. Dem Wegpunkt B* liegt ein Bezugspunkt 2650* auf der Seitenkante des Anlaufblechs 265* orthogonal gegenüber.
Der Angelpunkt der Lagerwelle 2695* des Hebelarms 2691* liegt orthogonal zu einem Wegpunkt A* auf dem Transportpfad, wobei der Wegpunkt A* in Transportrichtung x zu dem Wegpunkt B* einen Abstand K* aufweist. Der Abstand K* ist konstant ebenso wie ein Abstand L* zwischen dem Wegpunkt A* und dem Wegpunkt O*, welcher orthogonal zum Nullpunkt 0 liegt, an welchem ein Adapter 2672* einem Hub H* = 0 ausgesetzt ist. Der Hebelarm 2691* über die gesamte Länge bildet einen Lastarm, wobei sich die Last an einem Ende des Hebels und der Angelpunkt an dem anderen Ende des Hebels befindet. Bei einem einseitigen Hebel liegen Lastarm und Kraftarm auf derselben Seite. Der Kraftarm hat eine kürzere Länge als der Lastarm. Der Hebelarm 2691* weist in einem vertikalem Abstand T* vom Angelpunkt einen Drehpunkt einer Drehachse einer Lagerwelle auf. Die Lagerwelle ist Bestandteil eines Montageabschnitts 2693* der am Hebelarm 2691* montiert ist. Die Lagerwelle ist in einem Langloch des Montageabschnitts beweglich angeordnet. Das Langloch ist parallel zur Führungskulisse 2690* angeordnet.
Alternativ zum Langloch kann eine Koppelstange (nicht gezeigt) eingesetzt werden oder die Lagerwelle ist ein Bestandteil eines Montageabschnitts zweiter Art, der am Hebelarm 2691* - in einer nicht gezeigten Weise - verschiebbar montiert ist.
In Fig.10 verläuft die Drehachse der Lagerwelle des Montageabschnitts 2693* parallel zur y-Achse des kartesischen Koordinatensystems. An der Lagerwelle ist der Adapter 2672* des Antriebsmoduls 267* fest montiert. Der obere Teil des Stapels ST* liegt an der posteingangsseitigen Gehäusewand 17* der Zuführstation 20* an und ein unterer Teil des Stapels ST* liegt an dem Anlaufblech 265* an. In der Figur 10 ist ein Zustand des Stapels während einer Vereinzelung des untersten flachen Guts P1* des Stapels dargestellt. Der Verschiebeweg S* des Anlaufblechs 265* in entgegengesetzter Richtung zur Transportrichtung x ist Null. Der Abstand T* vom Angelpunkt bis zum Drehpunkt des Montageabschnitts 2693* bildet den Kraftarm des einseitigen Hebels. Eine linear bewegbare Antriebsstange 26711* (Fig. 11) eines Linearschrittmotors 2671* ist mit dem Adapter 2672* des Antriebsmoduls 267* kraft- und formschlüssig verbunden. Der Vorteil nach der zweiten Variante besteht darin, dass der Verschiebeweg S* aufgrund der Hebelwirkung gegenüber dem Hubweg H* in einer erforderlichen Weise abhängig vom Abstand T* verändert werden kann. Ein weiterer Vorteil besteht darin, dass ein kleinerer Bauraum zur Unterbringung des Bewegungsmittels nach der zweiten Variante erforderlich ist. Das Anlaufblech 265* ist mit einem Verschiebeweg S* = 0 dargestellt, da noch keine Verschiebung entgegengesetzt zur Transportrichtung x stattgefunden hat. Das vorgenannten Antriebsmodul 267* ist zu dessen Ansteuerung - in nicht gezeigter Weise - mit der Steuereinheit elektrisch verbunden. Gegebenenfalls kann ein weiterer Sensor (nicht gezeigt) zur Überwachung der Bewegung des Bewegungsmittels vorgesehen und mit der Steuereinheit elektrisch verbunden sein.

Die Figur 11 zeigt eine Frontansicht auf eine geschnittene schematische Darstellung einer Zuführstation 20* mit einem Bewegungsmittel nach der zweiten Variante in einer Arbeitsposition. Von den zwei Seitenwänden des Andruckkastens in denen die Lagerwelle des Hebelarms 2691* drehbar gelagert ist, wurde nur eine Seitenwand 2681* dargestellt. Die Antriebsstange 26711* des Linearschrittmotors 2671* ist maximal mit Maximalhub H*max ausgefahren, so dass der Hebelarm 2691* entgegengesetzt zur Transportrichtung x um einen Winkel **α** geschwenkt wird. In der Arbeitsposition des Bewegungsmittels wird der Stapel durch das Anlaufblech 265* (Fig. 10) aus der Hauptschleuse heraus geschoben und zum größten Teil auf das Anlegedeck (nicht dargestellt) zurückgeschoben. Das Anlaufblech 265* ist in einem dem Verschiebeweg S*max entsprechenden Abstand dargestellt. Es ist beispielsweise um ca. 10 mm verschoben, wobei die Verschiebung des Stapels ST* entgegengesetzt zur Transportrichtung x erfolgt. Der Bezugspunkt 2650* auf der Seitenkante des Anlaufblechs 265* liegt nun nicht mehr dem Wegpunkt B* orthogonal gegenüber, sondern die Abbildung eines entsprechenden Wegpunktes I* ist auf dem Transportpfad dem Wegpunkt B* in dem Abstand S*max vorgelagert. Die orthogonale Abbildung des Angelpunkts des Hebelarms auf dem Transportpfad wird als Wegpunkt A* bezeichnet. Die Wegpunkte K* und L* sowie O* sind, wie schon bei Fig.10 gezeigt, dargestellt. In der Figur 11 ist ein Zustand des Stapels nach der Vereinzelung des untersten flachen Guts P1* des Stapels und der Weitertransport des flachen Guts P1* dargestellt. Es ist vorgesehen, dass die Vereinzelungsvorrichtung eine Vereinzelungswalze 23* (Fig. 10) aufweist und dass die Bewegung des Teils der Vereinzelungsvorrichtung entgegengesetzt zur x-Richtung in einem Verschiebebereich erfolgt, der mindestens 20% - 100% des Radius der Vereinzelungswalze 23* beträgt.

Dadurch dass die Bewegungsmittel zur Bewegung des Teils der Vereinzelungsvorrichtung des Gutverarbeitungsgeräts bzw. der Zuführstation nur nach einer ersten oder zweiten Variante beschrieben wurden, sollen weitere Varianten des Bewegungsmittels der Zuführstation nicht ausgeschlossen werden. Weitere Varianten ergeben sich beispielsweise bereits aus einer Änderung der Bewegungsmechanik. Das Antriebsmodul 267* kann alternativ zu dem Linearschrittmotor auch mit einem anderen Aktuator aufgebaut sein.

Wenn im vorliegenden Beispiel eine bestimmte Ausführungsform, nämlich bevorzugt ein Bewegungsmittel nach einer ersten Variante näher erläutert wurde, soll aber dadurch nicht eine andere Ausführungsform nach einer weiteren Variante vom Schutzumfang ausgeschlossen werden, die - vom gleichen Grundgedanken der Erfindung ausgehend - eingesetzt werden kann und von den anliegenden Schutzansprüchen umfasst wird.

## Patentansprüche

1. Gutverarbeitungsgerät zum Anlegen und zum Vereinzeln von flachem Gut, mit einem Auflegedeck und einer Anlegevorrichtung sowie einem Zuführdeck und einer Vereinzelungsvorrichtung, wobei ein Teil der Anlegevorrichtung unter dem Auflegedeck des Gutverarbeitungsgeräts angeordnet ist und wobei das Zuführdeck eine Öffnung für eine Vereinzelungswalze aufweist und mit einem Teil der Vereinzelungsvorrichtung, das oberhalb des Zuführdecks angeordnet ist, wobei das vorgenannte Teil und die Vereinzelungswalze eine Hauptschleuse der Vereinzelungsvorrichtung zur Vereinzelung eines Stapels von flachen Gütern bilden, und mit einer Steuereinheit zur Steuerung der Anlegevorrichtung und Vereinzelungsvorrichtung, **gekennzeichnet dadurch, dass**
a) die Anlegevorrichtung zur Kantenausrichtung eines Stapels (ST) von flachen Gütern mit unterschiedlichen Format ausgestattet ist und mindestens zwei Transportelemente (141 ...14x) aufweist, welche ein automatisches Verschieben des Stapels (ST) quer zur Transportrichtung x und Anlegen des Stapels (ST) an eine Ausrichtwand (11) sowie einen Transport des Stapels (ST) in Transportrichtung x zum Zuführdeck (13, 21) der Vereinzelungsvorrichtung sowie ein Verschieben des Stapels (ST) entgegen der Transportrichtung x ermöglichen,
b) ein Bewegungsmittel zur Bewegung des Teils (265, 269*) der Vereinzelungsvorrichtung in eine zur Transportrichtung x entgegengesetzte Richtung vorgesehen ist, wobei das Bewegungsmittel aus einem Antriebsmodul (267, 267*) mit zugehöriger Bewegungsmechanik (26a, 269*) zur Bewegung des Teils der Vereinzelungsvorrichtung in Transportrichtung x und entgegengesetzt zur Transportrichtung x besteht und wobei das Teil der Vereinzelungsvorrichtung ein Anlaufblech (265, 265*) einschließt, und
c) Mittel zur Steuerung des Ausrichtungszustandes der Transportelemente der Anlegevorrichtung des Gutverarbeitungsgeräts (1) sowie zur Steuerung der Bewegung des Teils der Vereinzelungsvorrichtung vorgesehen sind, wobei das vorgenannte Teil ein Verschieben des Stapels entgegen der Transportrichtung x ermöglicht.

2. Gutverarbeitungsgerät, nach Anspruch 1, **gekennzeichnet dadurch, dass** das Gutverarbeitungsgerät (1) eine Anlegestation (10) und eine Zuführstation (20) umfasst, wobei
a) das Auflegedeck (12) der Anlegestation (10) mit der Anlegevorrichtung ausgestattet ist,
b) die Zuführstation (20) das Bewegungsmittel aufweist und
c) Mittel zur Steuerung des Ausrichtungszustandes der Transportelemente der Anlegevorrichtung der Anlegestation (10) sowie zur Steuerung der Bewegung des Teils der Vereinzelungsvorrichtung der Zuführstation (20) vorgesehen sind, wobei das vorgenannte Teil ein Verschieben des Stapels entgegen der Transportrichtung ermöglicht.

3. Gutverarbeitungsgerät, nach den Ansprüchen 1 und 2, **gekennzeichnet dadurch, dass** das Gutverarbeitungsgerät (1) eine Anlegevorrichtung bzw. eine Anlegestation (10) aufweist, dass je eine kreisförmige Öffnung (121 ... 12x) im Auflagedeck für jedes der Transportelemente (141 ... 14x) vorgesehen ist und dass die Transportelemente eine Wirkrichtung aufweisen, die um einen Winkel von 90°- ß gegenüber der Transportrichtung x bzw. im Winkel ß gegenüber der Richtung y verstellbar ist, wobei die Richtung y quer zur Transportrichtung x liegt, dass jedes Transportelement aus einem um eine Drehachse (1400) drehbaren Formdrehkörper (1401) mit einer tonnenförmigen Gummirolle (1402) besteht, wobei nach einer Drehung der Drehachse (1400) des Formdrehkörpers um einen Winkel von -ß gegenüber der Transportrichtung x eine resultierende Reibkraft Fr der tonnenförmigen Gummirolle (1402) in einer Wirkrichtung 90°- ß zur Transportrichtung x wirksam ist, dass die tonnenförmige Gummirolle einen größten Durchmesser am Tonnenäquator (1403) aufweist, wobei die Gummirolle unsymmetrisch beidseitig zum Tonnenäquator (1403) auf dem Formdrehkörper (1401) aufgebracht ist, so dass auf einer Seite vom Tonnenäquator eine breitere Lauffläche (14021) der tonnenförmigen Gummirolle ausgebildet ist, als auf der anderen Seite, dass der Formdrehkörper auf der vorgenannten anderen Seite eine seitliche Lauffläche (14012) aufweist, die einerseits bis zum Tonnenboden reicht und die andererseits mit der weniger breiten Lauffläche (14022) der tonnenförmigen Gummirolle bündig abschließt und dass die seitliche Lauffläche (14012) des Formdrehkörpers (1401) einen viel geringeren Reibkoeffizienten, als die Lauffläche der Gummirolle (1402) aufweist.

4. Gutverarbeitungsgerät, nach Anspruch 3, **gekennzeichnet dadurch, dass** ein erster Ausrichtungszustand der Transportelemente (14) der Anlegevorrichtung bzw. Anlegestation (10) vorgesehen ist, der ein Verschieben des Stapels entgegen der Transportrichtung x ermöglicht und in welchem die Richtung der Drehachse des Formdrehkörpers mit der Transportrichtung x übereinstimmt sowie die seitliche Lauffläche (14012) des Formdrehkörpers (1401) in eine Position stromabwärts der tonnenförmigen Gummirolle gebracht ist.

5. Gutverarbeitungsgerät, nach den Ansprüchen 1 bzw. 2, **gekennzeichnet dadurch, dass** das Auflegedeck (12) eine kleinere Auflagefläche, als ein größtes zu verarbeitendes Format eines flachen Guts erfordert.

6. Gutverarbeitungsgerät, nach Anspruch 1, **gekennzeichnet dadurch, dass** eine gemeinsame Steuereinheit (101) zur Steuerung der Anlege- und Vereinzelungsvorrichtungen des Gutverarbeitungsgeräts (1) vorgesehen ist und die Anlege- und Vereinzelungsvorrichtungen in einem gemeinsamen Gehäuse (H01) angeordnet sind.

7. Gutverarbeitungsgerät, nach den Ansprüchen 2 bis 5, **gekennzeichnet dadurch, dass** die Anlegevorrichtung in einer Anlegestation (10) und die Vereinzelungsvorrichtung in einer Zuführstation (20) angeordnet sind und dass je eine Steuereinheit in einer Anlegestation (10) und in einer Zuführstation (20) vorgesehen sind sowie dass die Steuereinheit der Zuführstation mit der Steuereinheit der Anlegestation kommunikativ verbunden ist.

8. Gutverarbeitungsgerät, nach Anspruch 2, **gekennzeichnet dadurch, dass** die Anlegestation (10) mindestens einen Sensor (S1), Encoder (EN3, EN4), Antriebsmittel (M3, M4) und eine zugehörige Bewegungsmechanik (15, 16) sowie eine Schnittstelle (112) und dass die Zuführstation (20) mindestens eine Schnittstelle (221) und eine Steuereinheit (220) aufweist und dass die Antriebsmittel der Transportelemente (141 ...14x) der Anlegestation (10) über die Schnittstellen (221, 112) von der Steuereinheit (220) der Zuführstation (20) aus angesteuert werden und dass die Sensorsignale und die Encodersignale der Encoder der Anlegestation (10) durch die Steuereinheit (220) abgefragt werden.

9. Gutverarbeitungsgerät, nach einem der Ansprüche 1 bis 8, **gekennzeichnet dadurch, dass** das Mittel, das zur Steuerung des Ausrichtungszustandes der Transportelemente der Anlegevorrichtung vorgesehen ist, das Antriebsmittel (M3) und die Bewegungsmechanik (15) der Anlegevorrichtung einschließt.

10. Gutverarbeitungsgerät, nach den Ansprüchen 1 oder 2, **gekennzeichnet dadurch, dass** Sensoren zur Überwachung der Bewegung des Stapels bzw. der flachen Güter in den Anlege- und Vereinzelungsvorrichtungen des Gutverarbeitungsgeräts oder der Anlegestation (10) und der Zuführstation (20) vorgesehen sind, wobei die Sensorsignale durch die gemeinsame Steuereinheit oder die jeweilige stationseigene Steuereinheit ausgewertet werden.

11. Gutverarbeitungsgerät, nach den Ansprüchen 1 oder 2, **gekennzeichnet dadurch, dass** die Vereinzelungsvorrichtung eine Vereinzelungswalze (23, 23*) aufweist und dass die Bewegung des Teils der Vereinzelungsvorrichtung entgegengesetzt zur Transportrichtung x in einem Verschiebebereich erfolgt, der mindestens 20% - 100% des Radius der Vereinzelungswalze (23, 23*) beträgt.

12. Gutverarbeitungsgerät, nach den Ansprüchen 1 oder 2, **gekennzeichnet dadurch, dass** die Bewegung des Teils der Vereinzelungsvorrichtung entgegengesetzt zur Transportrichtung x in einem Verschiebebereich erfolgt, der mindestens halb so groß wie der Radius der Vereinzelungswalze (23) ist.

13. Verfahren zum Ausrichten und Vereinzeln von Mischpost, **umfassend,**
a) ein Ausstatten eines Auflegedecks einer Anlegevorrichtung eines Gutverarbeitungsgeräts bzw. einer Anlegestation mit Mitteln zur Kantenausrichtung eines Stapels von flachen Gütern mit unterschiedlichen Format, wobei die vorgenannten Mittel mindestens zwei Transportelemente umfassen, welche ein automatisches Verschieben des Stapels quer zur Transportrichtung und Anlegen des Stapels an eine Ausrichtwand sowie einen Transport des Stapels in Transportrichtung zum Zuführdeck einer Vereinzelungsvorrichtung sowie ein Verschieben des Stapels entgegen der Transportrichtung ermöglichen,
b) Ausstatten der Vereinzelungsvorrichtung des Gutverarbeitungsgeräts bzw. der Zuführstation mit einem Bewegungsmittel zur Bewegung eines Teils der Vereinzelungsvorrichtung in eine zur Transportrichtung entgegengesetzten Richtung, wobei das Bewegungsmittel aus einem Antriebsmodul (267, 267*) mit zugehöriger Bewegungsmechanik (26a, 269*) zur Bewegung des Teils der Vereinzelungsvorrichtung in Transportrichtung x und entgegengesetzt zur x-Richtung besteht und wobei das Teil der Vereinzelungsvorrichtung ein Anlaufblech (265, 265*) einschließt, und
c) Steuerung des Ausrichtungszustandes der Transportelemente der Anlegevorrichtung des Gutverarbeitungsgeräts bzw. der Anlegestation sowie Steuerung der Bewegung des vorgenannten Teils der Vereinzelungsvorrichtung des Gutverarbeitungsgeräts bzw. der Zuführstation, um ein Verschieben des Stapels entgegen der Transportrichtung zu ermöglichen.

## Claims

1. Goods processing apparatus for placement and singulation of flat goods, with a placement of a placement device as well as a feed deck and a separation device, wherein a portion of the placement device is arranged below the placement deck of the goods processing apparatus, and wherein the feed deck has an opening for an separation roller; and with a portion of the separation device that is arranged above the feed deck, wherein the aforementioned portion and the separation roller form a main gate of the separation device for the singulation of a stack of flat goods; and with a control unit to control the placement device and separation device, **characterized in that**
a) the placement device is equipped for edge alignment of a stack (ST) of flat goods with different formats and has at least two transport elements (141, ..., 14x) which enable an automatic displacement of the stack (ST) transversal to the transport direction x and placement of the stack (ST) at an alignment wall (11), as well as a transport of the stack (ST) in the transport direction x towards the feed deck (13, 21) of the separation device, as well as a displacement of the stack (ST) counter to the transport direction x,
b) a movement means is provided to move the portion (265, 269*) of the separation device in a direction counter to the transport direction x, wherein the movement comprised of a drive module (267, 267*) with associated movement mechanism (26a, 269*) to move the portion of the separation device in the transport direction x and counter to the x-direction; and **in that** the portion of the separation device includes a ramp plate (265, 265*).
c) means are provided to control the alignment state of the transport elements of the placement device of the goods processing apparatus (1), and to control the movement of the portion of the separation device, wherein the aforementioned portion enables a displacement of the stack counter to the transport direction x.

2. Goods processing apparatus according to Claim 1, **characterized in that** the goods processing apparatus (1) comprises a placement station (10) and a feed station (20), wherein
a) the placement deck (12) of the placement station (10) is equipped with a placement device,
b) the feed station (20) has a movement means, and
c) means are provided to control the alignment state of the transport elements of the placement device of the placement station (10), and to control the movement of the portion of the separation device of the feed station (20), wherein the aforementioned portion enables a displacement of the stack counter to the transport direction x.

3. Goods processing apparatus according to Claims 1 and 2, **characterized in that** the goods processing apparatus (1) has a placement device or a placement station (10); **in that** a respective circular opening (121 ... 12x) is provided in a placement deck for each of the transport elements (141 ... 14x); and **in that** the transport elements have an active direction that can be displaced by an angle of 90° - β relative to the transport direction x, or in an angle β relative to the direction y, wherein the direction y is situated transversal to the transport direction x; **in that** each transport element is comprised of a molded rotation body (1401) that can be rotated around a rotation axis (1400), with a drum-shaped rubber roller (1402), wherein after a rotation of the rotation axis (1400) of the molded rotation body by an angle of -β relative to the transport direction x a resulting friction force Fr of the drum-shaped rubber roller (1402) is active in an active direction 90° - β relative to the transport direction x; **in that** the drum-shaped rubber roller has a greatest diameter at the drum equator (1403), wherein the rubber roller is applied asymmetrically onto the molded rotation body (1401) on both sides of the drum equator (1403) so that a wider running surface (14021) of the drum-shaped rubber roller is formed on one side of the drum equator than on the other side; **in that** the molded rotation body has on the aforementioned other side a lateral running surface (14012) that extends on one side up to the drum floor and that on the other side terminates flush with the less wide running surface (14022) of the drum-shaped rubber roller; and **in that** the lateral running surface (14012) of the molded rotation body (1401) has a much lower coefficient of friction than the running surface of the rubber roller (1402).

4. Goods processing apparatus according to Claim 3, **characterized in that** a first alignment state of the transport elements (14) of the placement device or placement station (10) is provided that enables a displacement of the stack counter to the transport direction x, and in which the direction of the rotation axis of the molded rotation body coincides with the transport direction x, and the lateral running surface (14012) of the molded rotation body (1401) is brought into a position downstream of the drum-shaped rubber roller.

5. Goods processing apparatus according to Claims 1 or 2, **characterized in that** the feed cover (12) requires a smaller placement surface than a largest format of a flat good that is to be processed.

6. Goods processing apparatus according to Claim 1, **characterized in that** a common control unit (101) is provided to control the placement and individualization devices of the goods processing apparatus (1), and the placement and individualization devices are arranged in a common housing (H01).

7. Goods processing apparatus according to Claims 2 through 5, **characterized in that** the placement device is arranged in a placement station (10) and the separation device is arranged in a feed station (20), and **in that** a respective control unit is provided in a placement station (10) and in a feed station (20), as well as **in that** the control unit of the feed station is connected in terms of communication with the control unit of the placement station.

8. Goods processing apparatus according to Claim 2, **characterized in that** the placement station (10) has at least one sensor (S1), encoders (EN3, EN4), drive means (M3, M4) and an associated movement mechanism (15, 16), as well as an interface (112); and **in that** the feed station (20) has at least one interface (221) and a control unit (220); and **in that** the drive means of the transport elements (141, ..., 14x) of the placement station (10) are controlled via the interfaces (221, 112) from the control unit (220) of the feed station (20); and **in that** the sensor signals and encoder signals of the encoders of the placement station (10) are polled by the control unit (220).

9. Goods processing apparatus according to any of the Claims 1 through 8, **characterized in that** the means that is provided to control the alignment state of the transport elements of the placement device includes the drive means (M3) and the movement mechanism (15) of the placement device.

10. Goods processing apparatus according to Claims 1 and 2, **characterized in that** sensors are provided for the monitoring of the movement of the stack or of the flat goods in the placement and separation devices of the goods processing apparatus or of the placement station (10) and the feed station (20), wherein the sensor signals are evaluated by the common control unit or the respective control unit belonging to the station.

11. Goods processing apparatus according to Claims 1 or 2, **characterized in that** the separation device has a separation roller (23, 23*); and **in that** the movement of the portion of the separation device counter to the transport direction x takes place in a displacement region that amounts to at least 20% - 100% of the radius of the separation roller (23, 23*).

12. Goods processing apparatus according to Claims 1 or 2, **characterized in that** the movement of the portion of the separation device counter to the transport direction x takes place in a displacement region that is at least half as large as the radius of the separation roller (23).

13. Method to align and singulation of mixed mail comprising steps:
a) equip a placement deck of a placement device of a goods processing apparatus or of a placement station with means for edge alignment of a stack of flat goods with different formats, wherein the aforementioned means comprise at least two transport elements which enable an automatic displacement of the stack transversal to the transport direction and placement of the stack at an alignment wall, as well as a transport of the stack in the transport direction towards the feed deck of a separation device, as well as a displacement of the stack counter to the transport direction,
b) equip of the separation device of the goods processing apparatus or of the feed station with a movement means to move a portion of the n separation device in a direction counter to the transport direction, wherein the movement comprised of a drive module (267, 267*) with associated movement mechanism (26a, 269*) to move the portion of the separation device in the transport direction x and counter to the x-direction; and in that the portion of the separation device includes a ramp plate (265, 265*) .
c) control the alignment state of the transport elements of the placement device of the goods processing apparatus or of the placement station, and control the movement of the aforementioned portion of the separation device of the goods processing apparatus or of the feed station, in order to enable a displacement of the stack counter to the transport direction.

## Revendications

1. Appareil de traitement de produits destiné à marger et à désolidariser des produits plats, doté d'une plaque de chargement et d'un dispositif margeur ainsi que d'une plaque d'acheminement et d'un dispositif de désolidarisation, une partie du dispositif margeur étant placée sous la plaque de chargement de l'appareil de traitement de produits et la plaque d'acheminement comportant une ouverture pour un cylindre séparateur et avec une partie du dispositif de désolidarisation, qui est placée au-dessus de la plaque d'acheminement, ladite partie et le cylindre séparateur formant un sas principal du dispositif de désolidarisation destiné à désolidariser une pile de produits plats et doté d'une unité de commande destinée à commander le dispositif margeur et le dispositif de désolidarisation, **caractérisé en ce que**
a) pour aligner les bords d'une pile (ST) de produits plats, le dispositif margeur est équipé de plusieurs formats et comporte au moins deux éléments de transport (141 ... 14x), lesquels permettent une translation automatique de la pile (ST) à la transversale de la direction de transport x et un margeage de la pile (ST) sur une paroi d'alignement (11), ainsi qu'un transport de la pile (ST) dans la direction de transport x vers la plaque d'acheminement (13, 21) du dispositif de désolidarisation et une translation de la pile (ST) à l'encontre de la direction de transport x,
b) un moyen de déplacement pour déplacer la partie (265, 269*) dur dispositif de désolidarisation dans une direction opposée à la direction de transport x, le moyen de déplacement étant composé d'un module d'entraînement (267, 267*) avec mécanisme de déplacement (26a, 269*) associé, pour déplacer la partie du dispositif de désolidarisation dans la direction de transport x et à l'opposée de la direction de transport x, la partie du dispositif de désolidarisation incluant une plaque d'approche (265, 265*), et
c) des moyens destinés à commander la position d'alignement der éléments de transport du dispositif margeur de l'appareil de traitement de produits (1), ainsi qu'à commander le déplacement de la partie du dispositif de désolidarisation, ladite partie permettant translation de la pile à l'encontre de la direction de transport x.

2. Appareil de traitement de produits selon la revendication 1, **caractérisé en ce que** l'appareil de traitement de produits (1) comprend un poste margeur (10) et un poste d'acheminement (20),
a) la plaque de chargement (12) du poste margeur (10) étant équipée du dispositif margeur,
b) le poste d'acheminement (20) comportant le moyen de déplacement et
c) des moyens de commande de la position d'alignement des éléments de transport du dispositif margeur du poste margeur (10) et de commande du déplacement de la partie du dispositif de désolidarisation du poste d'acheminement (20) étant prévus, ladite partie permettant une translation de la pile à l'encontre de la direction de transport.

3. Appareil de traitement de produits selon les revendications 1 et 2, **caractérisé en ce que** l'appareil de traitement de produits (1) comporte un dispositif margeur ou poste margeur (10), **en ce qu'**il est prévu chaque fois une ouverture (121 ... 12x) de forme circulaire dans la plaque de chargement pour chacun des éléments de transport (141 ... 14x) et **en ce que** les éléments de transport présentent une direction d'action qui est ajustable de la valeur d'un angle de 90°- β par rapport à la direction de transport x, ou dans l'angle β par rapport à la direction y, la direction y se situant à la transversale de la direction de transport x, **en ce que** chaque élément de transport est composé d'un corps moulé rotatif (1401) qui est rotatif autour d'un axe de rotation (1400), doté d'un galet en caoutchouc (1402) en forme de fût, après une rotation de l'axe de rotation (1400) du corps moulé rotatif autour d'un angle de -β par rapport à la direction de transport x, une force de friction Fr résultante du galet en caoutchouc (1402) en forme de tonneau étant active dans une direction d'action de 90°- β par rapport à la direction de transport x, **en ce que** le galet en caoutchouc en forme de tonneau présente un diamètre le plus grand sur l'équateur du tonneau (1403), le galet en caoutchouc étant appliqué de manière asymétrique de part et d'autre de l'équateur du tonneau (1403) sur le corps moulé rotatif (1401), de sorte que sur un côté de l'équateur du tonneau, il soit créé une surface de roulement (14021) du galet en caoutchouc en forme de tonneau plus large que sur l'autre côté, **en ce que** sur ledit autre côté, le corps moulé rotatif comporte une surface de roulement (14012) latérale, qui d'une part arrive jusqu'au fond inférieur du tonneau et qui d'autre part termine à fleur de la surface de roulement (14022) moins large du galet en caoutchouc en forme de tonneau et **en ce que** la surface de roulement (14012) latérale du corps moulé rotatif (1401) fait preuve d'un coefficient de friction nettement inférieur à celui de la surface de roulement du galet en caoutchouc (1402).

4. Appareil de traitement de produits selon la revendication 3, **caractérisé en ce qu'**il est prévu une première position d'alignement des éléments de transport (14) du dispositif margeur ou du poste margeur (10), qui permet une translation de la pile à l'encontre de la direction de transport x et dans laquelle la direction de l'axe de rotation du corps moulé rotatif coïncide avec la direction de transport x et la surface de roulement (14012) latérale du corps moulé rotatif (1401) est amenée dans une position en aval du galet en caoutchouc en forme de tonneau.

5. Appareil de traitement de produits selon les revendications 1 ou 2, **caractérisé en ce que** la plaque de chargement (12) requiert une surface d'appui inférieure à un format de traitement le plus grand d'un produit plat.

6. Appareil de traitement de produits selon la revendication 1, **caractérisé en ce qu'**il est prévu une unité de commande (101) commune, destinée à commander les dispositifs margeur et de désolidarisation de l'appareil de traitement de produits (1) et **en ce que** les dispositifs margeur et de désolidarisation sont placés dans un carter (H01) commun.

7. Appareil de traitement de produits selon les revendications 2 à 5, **caractérisé en ce que** le dispositif margeur est placé dans un poste margeur (10) et le dispositif de désolidarisation dans un poste d'acheminement (20) et **en ce que** chaque fois une unité de commande est prévue dans poste margeur (10) et dans un poste d'acheminement (20) et l'unité de commande du poste d'acheminement est connectée en communication avec l'unité de commande du poste margeur.

8. Appareil de traitement de produits selon la revendication 2, **caractérisé en ce que** le poste margeur (10) comporte au moins un capteur (S1), un encodeur (EN3, EN4), des moyens d'entraînement (M3, M4) et un mécanisme de déplacement (15, 16) associé, ainsi qu'une interface (112) et **en ce que** le poste d'acheminement (20) comporte au moins une interface (221) et une unité de commande (220) et **en ce que** les moyens d'entraînement des éléments de transport (141 ... 14x) du poste margeur (10) sont commandés par l'intermédiaire des interfaces (221, 112) à partir de l'unité de commande (220) du poste d'acheminement (20) et **en ce que** les signaux de capteurs et les signaux d'encodeurs des encodeurs du poste margeur (10) sont interrogés par l'unité de commande (220).

9. Appareil de traitement de produits selon l'une quelconque des revendications 1 à 8, **caractérisé en ce que** le moyen qui est prévu pour commander la position d'alignement des éléments de transport du dispositif margeur englobe le moyen d'entraînement (M3) et le mécanisme de déplacement (15) du dispositif margeur.

10. Appareil de traitement de produits selon les revendications 1 ou 2, **caractérisé en ce que** des capteurs sont prévus pour superviser le déplacement de la pile ou des produits plats dans les dispositifs margeur et de désolidarisation de l'appareil de traitement de produits ou du poste margeur (10) et du poste d'acheminement (20), les signaux des capteurs étant évalués par l'unité de commande commune ou par l'unité de commande respective propre au poste.

11. Appareil de traitement de produits selon les revendications 1 ou 2, **caractérisé en ce que** le dispositif de désolidarisation comporte un cylindre séparateur (23, 23*) et **en ce que** le déplacement de la partie du dispositif de désolidarisation s'effectue à l'encontre de la direction de transport x, dans une plage de déplacement qui s'élève à au moins de 20 % - 100 % du rayon du cylindre séparateur (23, 23*).

12. Appareil de traitement de produits selon les revendications 1 ou 2, **caractérisé en ce que** le déplacement de la partie du dispositif de désolidarisation s'effectue à l'encontre de la direction de transport x, dans une plage de déplacement correspondant au moins à la moitié du rayon du cylindre séparateur (23).

13. Procédé destiné à aligner et à désolidariser du courrier mixte, comprenant :
a) un équipement d'une plaque de chargement d'un dispositif margeur d'un appareil de traitement de produits ou d'un poste margeur avec des moyens d'alignement des bords d'une pile de produits plats de différent format, lesdits moyens comprenant au moins deux éléments de transport lesquels permettent une translation automatique de la pile à la transversale de la direction de transport et un margeage de la pile sur une paroi d'alignement, ainsi qu'un transport de la pile dans la direction de transport vers la plaque d'acheminement d'un dispositif de désolidarisation, ainsi qu'une translation de la pile à l'encontre de direction de transport,
b) un équipement du dispositif de désolidarisation de l'appareil de traitement de produits ou du poste d'acheminement avec un moyen de déplacement pour déplacer une partie du dispositif de désolidarisation dans une direction opposée à la direction de de transport, le moyen de déplacement étant constitué d'un module d'entraînement (267, 267*) avec mécanisme de déplacement (26a, 269*) associé, pour déplacer la partie du dispositif de désolidarisation dans la direction de transport x et à l'encontre de la direction x, et la partie du dispositif de désolidarisation incluant une plaque d'approche (265, 265*), et
c) une commande de la position d'alignement des éléments de transport du dispositif margeur de l'appareil de traitement de produits ou du poste margeur, ainsi qu'une commande du déplacement de ladite partie du dispositif de désolidarisation de l'appareil de traitement de produits ou dur poste d'acheminement, pour permettre de faire translater la pile à l'encontre de la direction de transport.
